# EUROPEAN PATENT APPLICATION

(11) **EP 2 211 329 A2**
(43) Date of publication of application: **28.07.2010**
(21) Application number: 10151612.8
(22) Date of filing: 26.01.2010
(51) Int. Cl.: G09G 3/34, G09G 3/36

(54) **Color display unit**

(30) Priority: 26.01.2009 JP 2009014629
(71) Applicant: Sony Corporation, Tokyo 108-0075 (JP)
(72) Inventor: Furukawa, Norimasa, Tokyo 108-0075 (JP)
(74) Representative: Beder, Jens

(57) **Abstract**

A color display unit is provided, which allows color display to be performed with high efficiency in utilizing light as compared with a prior type using all of RGB color filters. The color display unit includes a light source section (30) having plural kinds of color LEDs (31,32,33), and includes a display section (10) controlling transmissivity of light from the light source section (30) in synchronization with light emission control by the light source section (30), to achieve desired color display. The display section (10) has a full-color transmittable region (18) and a partially transmittable region (19). The full-color transmittable region (18) allows all color components of the light to be transmitted, while the partially transmittable region (19) inhibits passage of one or more in the color components of the light. The display section (10) controls the transmissivity of the light independently for each of the full-color transmittable region (18) and the partial transmittable region (19).

## Description

### BACKGROUND OF THE INVENTION

### Field of the Invention

The present invention relates to a color display unit performing color display using a plurality of LED (Light Emitting Diodes).

### Description of Related Art

In the past, a color display unit includes a combination of a transmittable color display panel such as color liquid crystal panel and a backlight (see Japanese Unexamined Patent Application Publication No. 2007-4099). The color display panel typically uses three kinds of color filters, i.e., an R (red) filter, a G (green) filter, and a B (blue) filter. A backlight using an LED light source is generally known. In a previous type of the backlight using the LED light source, three kinds of light emitting diodes, i.e., R (red) LED, G (green) LED, and B (blue) LED are used, each LED including a semiconductor element emitting monochromatic light by itself. In this backlight type, three kinds of monochromatic LED, red LED, green LED and blue LED, are combined, and respective color light from the three kinds of LEDs are mixed so that white light is obtained. In the backlight type, light emission of each color LED is allowed by a dedicated drive circuit, and emission intensity of each color light is detected by a sensor. Then, respective color LED are adjusted in intensity of light emission so that respective color light are mixed with uniform light emission intensity so as to obtain a desired color tone, thereby white light having a predetermined color temperature may be obtained.

As an advantage of the backlight type using the monochromatic LED, the backlight type has a feature that since a light source itself is a semiconductor element, the light source changes at high speed from a non-luminous state to a luminous state or from a luminous state to a non-luminous state, and therefore the light source typically has fast luminance response, and extremely short afterglow time. Moreover, relatively good unimodal is obtained in a spectral characteristic (wavelength [nm] in abscissa, and light intensity [cd] in ordinate) of light emission output of each color. Therefore, since chromaticity coordinates (primary-color chromaticity points) plotted on a CIE (Commission Internationale de l'Eclairage) chromaticity diagram are close to a horseshoe-shaped line showing a single wavelength, a wide color reproduction range may be advantageously provided. Furthermore, as a largest feature, since RGB light emission intensity may be individually changed, full-color light emission is achieved by the backlight itself. This leads to an advantage that a degree of freedom is extremely large as a light source for TV (television), and life management in accordance with change in light emission intensity of each color with time, may be performed by a servo circuit or the like for appropriately controlling the quantity of light to be constant.

In another backlight type, blue-excited white LED is used. The blue-excited white LED has a blue LED chip emitting blue light, and red and green phosphors to be excited by blue light from the blue LED chip. In this type of white LED, blue light as excitation light is mixed with fluorescently emitted, red light and green light, so that white light is obtained. In this type, high color rendering properties may be obtained by adjusting white light to have a three-wavelength spectral characteristic.

In the blue-excited LED, since excitation light itself is a visible light beam, the excitation light color is necessarily mixed with fluorescent light emission color. Therefore, it is hard to singly extract a light component emitted from a phosphor as a monochromatic visible light beam. In contrast, for example, if LED emits light by means of ultraviolet rays being invisible light as excitation light like a previously used fluorescent lamp, only a light component emitted from a phosphor may be extracted as a visible light component. Therefore, ultraviolet-excited LED is now investigated. If such an ultraviolet-excited type is used, since an excitation light source is invisible, RGB independent-light-emission LED using phosphors may be produced without using the semiconductor-element LED emitting RGB monochromatic light by themselves. However, the ultraviolet-excited LED is low in luminous efficiency. Moreover, in existing ultraviolet-excited phosphors, particularly, all red phosphors at present have long afterglow time as their original properties, namely, a phosphor having short afterglow time does not exist yet. As a background of this, much time has been taken for developing such materials.

### SUMMARY OF THE INVENTION

The backlight being a light source of a liquid crystal television is an important functional device, and recently, a method called blinking backlight is sometimes used for improving visibility during displaying a moving picture by blinking the backlight. Since such a method is necessary, response speed is particularly important performance among performance desired for the backlight. That is, it is necessary that when the backlight is turned on, certain brightness is quickly obtained, and when the backlight is turned off, the backlight may be momentarily extinguished. A display method called field sequential is also investigated, where each monochromatic screen is separately displayed on a time axis. RGB monochromatic LED are typically used as LED for the field sequential display method, and a black-and-white panel without any color filter is often used on a display panel side.

However, the ultraviolet-excited LED is low in luminous efficiency, and particularly, all red phosphors at present have long afterglow time. Therefore, when the ultraviolet-excited LED are used to configure RGB independent-light-emission (fluorescent-light-emission) LED, response performance desired for TV use is hardly satisfied. Particularly, since red afterglow is long, red light disadvantageously remains long as compared with other color light even after respective color LED are turned off. Since such a difficulty of an afterglow characteristic of the red phosphor of the ultraviolet-excited LED relates to red light, the difficulty may be overcome by using semiconductor-light-emission LED (specifically, LED having a composition of ALGaINP) having short afterglow. However, the semiconductor-light-emission red LED disadvantageously has a property of large temperature dependence of light emission output, and has a property that when the LED becomes hot, light emission output is decreased to approximately half. Furthermore, the red LED has forward voltage drop of about 2 volts, which is about 1 volt low as compared with that of another color element (blue or green), about 3 to 4 volts, leading to a difficulty that circuit setting may not be made common between the color elements. Consequently, handling of circuits is difficult, and circuit cost is high.

On the other hand, a blue-excited red phosphor has short afterglow time, and therefore the phosphor has substantially no difficulty in that point. As a background of appearance of blue-excited white LED, progress in development of fluorescent materials is listed, which provide fluorescent light emission having high unimodal in wavelength ranges of respective primary colors. Further improvement of the fluorescent materials is still supposed in the future. Moreover, use of the white LED is advantageous in that a display grade may be improved for TV use, for example, a display color reproduction range may be increased as in the RGB monochromatic semiconductor-light-emission LED. Moreover, since only a single excitation semiconductor element, blue LED, needs to be used, reduction in cost in total is expected due to volume efficiency or the like. In this way, the blue-excited white LED is considered to have many industrial advantages. However, the white LED has the following demerits as compared with the RGB independent-light-emission LED from a viewpoint of TV use.

As a first demerit, color change with time may not be corrected by LED itself being a light emission source. For comparison, a case of the RGB independent-light-emission LED is exemplified. In the case of the RGB independent-light-emission LED, while each of RGB light emission sources independently has a life, a control mechanism, which monitors each light emission output to keep the output constant, is provided, so that a light emission ratio between R, G and B may be kept constant for a certain period. This enables that even if a characteristic of the quantity of each of RGB light emission is changed with time in an uncontrolled condition, a color tone of white light is not changed in total. On the other hand, in the case of the white LED, when excitation light is blue light, the blue light is mixed with fluorescent red and green emission light so that white light is composed. Therefore, when the blue light as an excitation source is degraded, emission output of each of red light and green light is accordingly reduced substantially concurrently with such degradation. If a level of such reduction is uniform between the colors, a color tone is not changed. However, actually, such change does not necessarily uniformly occur because of, for example, change in excitation wavelength of the blue light as an excitation source. Therefore, RGB balance of the mixed white light is changed, resulting in a difficulty of change in color tone. Since such balance is lost within one LED component, the balance may not be adjusted by the LED itself.

As a second demerit, color backlight drive may not be performed. A display method is recently developed, where light control is partially performed even on a backlight side in correspondence to image display on a display panel side. The partial light control on the backlight side may be achieved by two-dimensionally arranging a plurality of RGB monochromatic-light-emission LED. According to this display method, increase in contrast and in color purity may be performed on the backlight side being a light source side unlike a typical display method where gradation control and color display control are performed only on the display panel side. Specifically, for example, when a region for displaying a red image exists on the display panel side, red light is turned on even on the backlight side in a region corresponding to the relevant region. In this way, emission light color of a backlight may be selected in accordance with an image display color, and power consumption may be reduced, for example, by such an attempt that LED in other color areas are turned off. On the other hand, partial light control may not be performed for each monochromatic light in the backlight using the white LED, the backlight being to be used while emission colors are mixed into white.

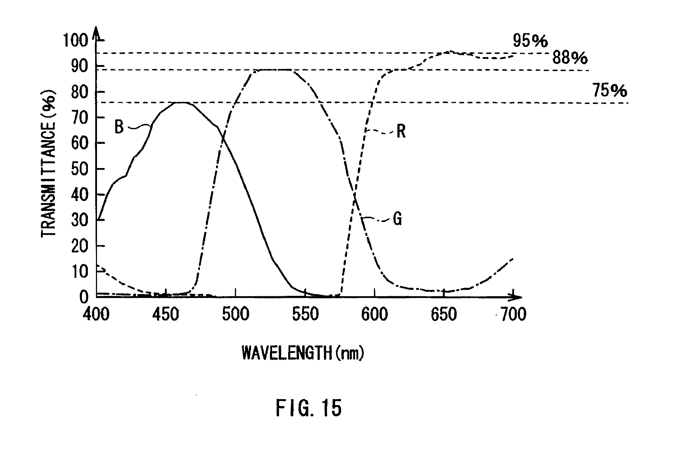

When the white LED is used for a backlight, RGB color filters need to be used on a display panel side. When the RGB monochromatic-light-emission LED are combined to configure a white light source as an overall backlight, the color filters similarly need to be used. FIG. 15 shows spectral transmittance of each of typical RGB color filters. As shown in FIG. 15, a blue filter has a low transmittance as compared with other color filters. Therefore, use of the blue filter is disadvantageous in the light of use efficiency of light.

It is desirable to provide a color display unit in which color display may be performed with high use efficiency of light as compared with a previous type using all of RGB color filters.

A color display unit according to an embodiment of the invention includes a light source section having plural kinds of LEDs, each of the LEDs being independently controlled to emit light, and each kind of LEDs emitting light of a color different from another, and a display section controlling transmissivity of light from the light source section in synchronization with light-emission control by the light source section, thereby to achieve desired color display. The display section has a full-color transmittable region and a partially transmittable region, the full-color transmittable region allowing all color components of the light from the light source section to be transmitted, while the partially transmittable region inhibiting passage of one or more in the color components of the light from the light source section, and the display section controls the transmissivity of the light from the light source section independently for each of the full-color transmittable region and the partially transmittable region.

According to the color display unit of the embodiment of the invention, the plural kinds of LEDs are used for the light source section, and light emission control is independently performed for each of different kinds of color light. In the display section, the transmissivity of the light emitted from the light source section is independently controlled for each of the full-color transmittable region and the partially transmittable region. The full-color transmittable region may transmit all the color components of light emitted from the light source section. The partially transmittable region inhibits passage of one or more in the color components of the light from the light source section. Since the full-color transmittable region that need not use a color filter for a particular color is provided, use efficiency of light is increased as compared with the previous type using all the RGB color filters.

In the color display unit according to the preferred embodiment of the invention, the plural kinds of LEDs are three kinds of LEDs which are blue LEDs, magenta LEDs and cyan LEDs, each LED being independently controlled to emit light of respective colors. The cyan LED includes a blue light emitter and a green phosphor, the green phosphor being excited by blue light from the blue light emitter to emit green light. The magenta LED includes a blue light emitter and a red phosphor, the red phosphor being excited by blue light from the blue light emitter to emit red light. The partially transmittable region in the display section inhibits passage of the blue light, or both of the blue light and other color light.

In this way, when the blue LED and the magenta and cyan, complementary-color LED are used for the light source section, light emission control is independently performed for each of blue and the complementary-color of magenta or cyan. A blue-excited phosphor is used for both the magenta LED and the cyan LED, resulting in high luminance efficiency and a short afterglow characteristic as compared with an ultraviolet-excited LED. In the display section, the transmissivity of the light emitted from the light source section is independently controlled for each of the full-color transmittable region and the partially transmittable region. In the case of this configuration, the partially transmittable region inhibits passage of the blue light, or both of the blue light and other color light from the light source section. Therefore, in the case of the configuration, since a blue filter need not be used, use efficiency of light is increased as compared with a previous type using all the RGB color filters.

According to the color display unit of the embodiment of the invention, since the plural kinds of LEDs are independently controlled in light emission, the quantity of light emitted by each LED is appropriately adjusted, thereby color balance may be adjusted, so that change in color with time may be corrected. In addition, the display section has the partially transmittable region, and the full-color transmittable region that need not use a color filter for a particular color, and a transmittivity of the light emitted from the light source section may be independently controlled for each of the regions. Even such a structure of the display section may increase use efficiency of light as compared with the previous type using all the RGB color filters. Moreover, the display section is operated in synchronization with light emission control of the light source section, thereby the color display unit may be applied to color image display by the field sequential method or the like.

Particularly, when the blue LED and the blue-excited complementary-color LED are used for the light source section, and the LED are independently controlled in light emission, high luminance efficiency and a short afterglow characteristic may be obtained as compared with an ultraviolet-excited LED. Even in this case, when the blue LED and the complementary color LED are independently controlled in light emission, the quantity of light emitted by each LED may be appropriately adjusted, so that color balance may be adjusted, and change in color with time may be corrected. Particularly, when the full-color transmittable region and the partially transmittalbe region are configured without using a blue filter having low transmittance as compared with other color filters, use efficiency of light may be further increased. From these, color display may be achieved, which is high in use efficiency of light and is stable as compared with the previous type using all the RGB color filters.

Other and further objects, features and advantages of the invention will appear more fully from the following description.

### BRIEF DESCRIPTION OF THE DRAWINGS

FIG. 1 is a section view showing a configuration example of a color display unit according to a first embodiment of the invention.

FIG. 2 is a section view showing a configuration example of cyan LED.

FIG. 3 is a section view showing a configuration example of magenta LED.

FIG. 4 is an explanatory view schematically showing a concept of a first display example (RGB display) according to the color display unit of the first embodiment of the invention.

FIG. 5 is an explanatory view schematically showing a concept of a second display example (complementary color display) according to the color display unit of the first embodiment of the invention.

FIG. 6 is a section view showing a configuration example of a color display unit according to a second embodiment of the invention.

FIG. 7 is an explanatory view schematically showing a concept of a first display example (RGB display) according to a color display unit of a second embodiment of the invention.

FIG. 8 is an explanatory view schematically showing a basic concept of a second display example (complementary color display) according to the color display unit of the second embodiment of the invention.

FIG. 9 is an explanatory view schematically showing a concept of color balance adjustment in the second display example shown in FIG. 8.

FIG. 10 is a section view showing a configuration example of a previous color display unit.

FIG. 11 is an explanatory view schematically showing a concept of a first display example (RGB display) according to the previous color display unit using a white backlight.

FIG. 12 is an explanatory view schematically showing a concept of a second display example (complementary color display) according to the previous color display unit using the white backlight.

FIG. 13 is an explanatory view schematically showing a concept of a first display example (RGB display) according to the previous color display unit using RGB independent light sources.

FIG. 14 is an explanatory view schematically showing a concept of a second display example (complementary color display) according to the previous color display unit using the RGB independent light sources.

FIG. 15 is a transmission characteristic diagram showing transmittances different between RGB color filters.

FIG. 16 is a section view showing a first configuration example of a color display unit according to a third embodiment of the invention.

FIG. 17 is an explanatory view schematically showing a concept of a first display example (first example of RGB display) according to the color display unit of the third embodiment of the invention.

FIG. 18 is an explanatory view schematically showing a concept of a second display example (second example of RGB display) according to the color display unit of the third embodiment of the invention.

FIG. 19 is an explanatory view schematically showing a basic concept of a third display example (complementary color display) according to the color display unit of the third embodiment of the invention.

FIG. 20 is a section view showing a first modification of the color display unit according to the third embodiment of the invention.

FIG. 21 is a section view showing a second modification of the color display unit according to the third embodiment of the invention.

FIG. 22 is a section view showing a configuration example of a color display unit according to a fourth embodiment of the invention.

FIGs. 23A and 23B are explanatory diagrams showing a concept of transmission band selection using a magenta filter, wherein FIG. 23A shows a case of extracting red light, and FIG. 23B shows a case of extracting blue light.

FIGs. 24A and 24B are explanatory diagrams showing a concept of transmission band selection using a cyan filter, wherein FIG. 24A shows a case of extracting green light, and FIG. 24B shows a case of extracting blue light.

FIG. 25 is an explanatory view schematically showing a concept of a first display example (RGB display) according to the color display unit of the fourth embodiment of the invention.

FIG. 26 is an explanatory view schematically showing a basic concept of a second display example (complementary color display) according to the color display unit of the fourth embodiment of the invention.

### DETAILED DESCRIPTION OF THE PREFERRED EMBODIMENTS

Hereinafter, preferred embodiments of the invention will be described in detail with reference to drawings.

### [First Embodiment]

### [Basic configuration of color display unit]

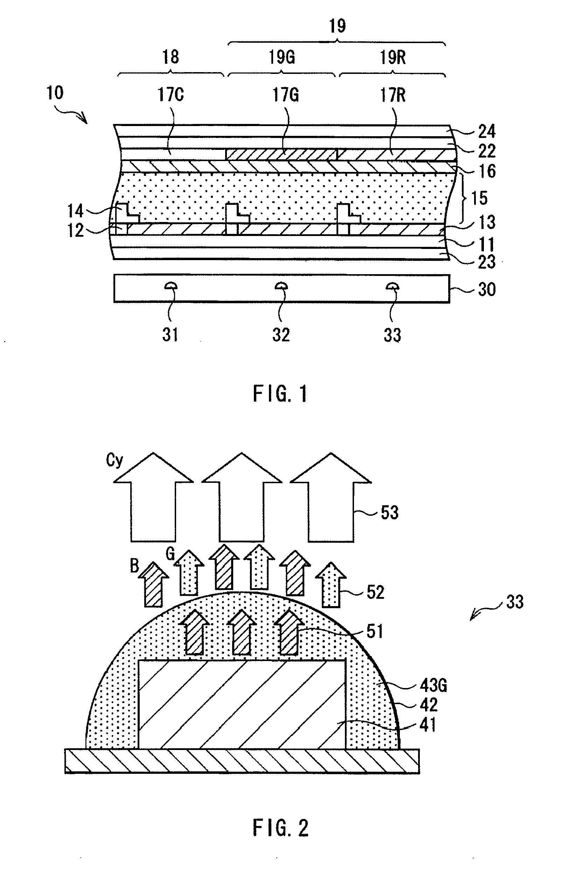

FIG. 1 shows a basic configuration example of a color display unit according to a first embodiment of the invention. The color display unit has a display panel 10, and a backlight 30 opposed to the display panel 10 on a back side of the display panel 10. The backlight 30 has three kinds of LEDs, i.e., blue LED 31, magenta LED 32, and cyan LED 33, each LED being able to be independently controlled in light emission. The blue LED 31 is a semiconductor light emitting element including a GaN (gallium nitride) based semiconductor material or the like.

In the embodiment, the display panel 10 corresponds to a specific example of the display section according to the invention. The backlight 30 corresponds to a specific example of the light source section according to the invention.

The display panel 10 performs desired color display by controlling the transmissivity of the light irradiated from the backlight 30. The display panel 10 has a full-color transmittable region 18 that may transmit all color components of light emitted from the backlight 30, and a partially transmittable region 19 that may not transmit at least blue light in the color components of light emitted from the backlight 30. The display panel 10 is designed such that the transmissivity of the light illuminated from the backlight 30 may be independently controlled for each of the full-color transmittable region 18 and the partially transmittable region 19. More particularly, the partially transmittable region 19 includes a red transmittable region 19R that may transmit only red light in the color components of light emitted from the backlight 30, and a green transmittable region 19G that may transmit only green light in the color components. The display panel 10 is designed such that the transmissivity of the light may be independently controlled for each the full-color transmittable region 18, the red transmittable region 19R, and the green transmittable region 19G.

FIG. 1 exemplifies a structure of an active matrix, transmittable liquid crystal panel as a configuration example of the display panel 10. However, a configuration of the display panel 10 is not limited to the exemplified configuration. The display panel 10 includes a first substrate 11 and a second substrate 22 opposed to the first substrate 11, and a liquid crystal layer 15 interposed between the first and the second substrates 11 and 22. The first and the second substrates 11 and 22 are substrates transparent to visible light including a glass material or the like. A polarizing film 23 is disposed on a surface on a light incidence side of the first substrate 11. A polarizing film 24 is disposed on a surface on a light incidence side of the second substrate 12.

A plurality of TFT (Thin Film Transistors) 12, a plurality of pixel electrodes 13, and a wiring layer 14 are stacked on a surface on a liquid crystal layer 15 side of the first substrate 11. Each of the pixel electrodes 13 has a size in accordance with size of a corresponding transmittable area (the full-color transmittable region 18, the red transmittable region 19R, or the green transmittable region 19G). Each pixel electrode 13 includes a conductive film transparent to visible light such as an ITO (Indium Tin Oxide) film. The TFT 12 are switching elements provided in correspondence to the pixel electrodes 13 respectively. The wiring layer 14 applies an electric signal to the TFT 12 for driving the TFT 12. A not-shown alignment film is formed between the pixel electrodes 13 and the liquid crystal layer 15.

A filter layer and a common electrode 16 are stacked on a surface on a liquid crystal layer 15 side of the second substrate 22. A not-shown alignment film is formed between the common electrode 16 and the liquid crystal layer 15. The common electrode 16 includes a conductive film transparent to visible light such as an ITO film. The common electrode 16 is uniformly formed approximately all over a surface. The filter layer includes a transparent filter 17C, a red filter 17R, and a green filter 17G. The transparent filter 17C is a filter transparent to visible light, and transmits all color light including red light, green light, and blue light. The red filter 17R is transparent to red light, and opaque to other color light. The green filter 17G is transparent to green light, and opaque to other color light.

The transparent filter 17C is provided in correspondence to the full-color transmittable region 18. The red filter 17R is provided in correspondence to the red transmittable region 19R. The green filter 17G is provided in correspondence to the green transmittable region 19G. To reversely describe, a region where the transparent filter 17C is provided is defined as the full-color transmittable region 18, a region where the red filter 17R is provided is defined as the red transmittable region 19R, and a region where the green filter 17G is provided is defined as the green transmittable region 19G. Size of each color filter is approximately equal to size of the corresponding transmittable region. While description is made in the embodiment assuming that the full-color transmittable region 18, the red transmittable region 19R, and the green transmittable region 19G have approximately the same size (the filters have the same size), size of each transmittable region may be appropriately freely set.

In the display panel 10, a drive voltage is selectively applied to the pixel electrodes 13, and a common voltage is applied to the common electrode 16, thereby arrangement of liquid crystal molecules in the liquid crystal layer 15 is changed so as to modulate incident light. Thus, the transmissivity of the light illuminated from the backlight 30 may be controlled for each of the pixel electrodes 13. Since the pixel electrodes 13 are provided in correspondence to the full-color transmittable region 18, the red transmittable region 19R, and the green transmittable region 19G, the transmissivity of the light may be independently controlled for each of the transmittable regions.

### [Configuration of complementary color LED]

FIG. 2 shows a configuration example of the cyan LED 33. The cyan LED 33 has a blue LED chip 41 emitting blue light 51, and a green phosphor 43G that is excited by the blue light 51 from the blue LED chip 41, and thus emits green light 52. The cyan LED 33 emits cyan light 53 composed by mixing the blue light 51 from the blue LED chip 41 with the green light 52 emitted by the green phosphor 43G. The blue LED chip 41 is a semiconductor light emitting element including a GaN (gallium nitride) based semiconductor material or the like. The blue LED chip 41 is molded by a transparent resin mold 42. A fluorescent pigment or fluorescent dye to be excited by the blue light 51 is dispersed in the resin mold 42 as the green phosphor 43G.

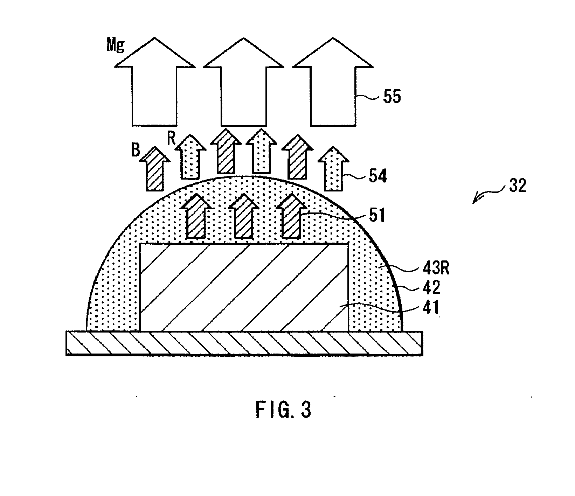

FIG. 3 shows a configuration example of the magenta LED 32. While the magenta LED 32 has the same basic structure as the cyan LED 33, the magenta LED 32 includes a red phosphor 43R in place of the green phosphor 43G. The red phosphor 43R is excited by the blue light 51 and thus emits red light 54. The magenta LED 32 emits magenta light 55 composed by mixing the blue light 51 from the blue LED chip 41 with red light 54 emitted by the red phosphor 43R.

For example, (ME: Eu)S, (M: Sm)ₓ(Si, Al)₁₂(O, N)₁₆, ME₂Si₅N₈: Eu, (Ca: Eu)SiN₂, and (Ca: Eu)AlSiN₃ may be used as the red phosphor 43R of the magenta LED 32. In the phosphors listed herein, ME means at least one element selected from a group including Ca, Sr and Ba. M means at least one element selected from a group including Li, Mg and Ca.

For example, (ME: Eu)Ga₂S₄, (M: RE)ₓ(Si, Al)₁₂(O, N)₁₆, (M: Tb)ₓ(Si, Al)₁₂(O, N)₁₆, and (M: Yb)ₓ(Si, Al)₁₂(O, N)₁₆ may be used as the green phosphor 43G of the cyan LED 33. In the phosphors listed herein, ME means at least one element selected from a group including Ca, Sr and Ba. M means at least one element selected from a group including Li, Mg and Ca. RE means Tb or Yb. Furthermore, (Me: Eu)₂SiO₄ may be used as the green phosphor 43G. Me means at least one element selected from a group including Ca, Sr, Ba and Mg.

### [Configuration of image display device]

When the color display unit is used for a TV image display device or the like, a pixel structure section of the display panel 10 shown in FIG. 1 may be formed in a two-dimensional matrix pattern. In this case, a structural portion of the display panel 10 shown in FIG. 1 corresponds to a structure of one pixel. The backlight 30 may be structured such that a plurality of blue LED 31, a plurality of magenta LED 32, and a plurality of cyan LED 33 are arranged in a two-dimensional matrix pattern respectively so that the whole surface of the display panel 10 may be sufficiently illuminated by the backlight for each of the color components.

In the color display unit according to the present embodiment, drive control of the display panel 10 and light emission control of the backlight 30 are synchronously performed by a display method described later, so that, for example, RGB color display may be performed in a time-shared manner. Therefore, when the color display unit is used as an image display device, color image display may be performed by a field sequential method or the like. In the field sequential method, additive color mixing is temporally performed. More specifically, an input image is decomposed into a plurality of color component images (field images) in frames, and each color component image is sequentially displayed in a time-shared manner within one frame. Thus, each color light is made indiscernible by temporal color mixing due to a storage effect in a temporal direction of human eyes, so that a color image is displayed by means of temporal color mixing. When the field sequential method is used, a control circuit may be provided, which synchronously controls operation of the display panel 10 and operation of the backlight 30.

Next, display operation of the color display unit is described. Particularly, description is made on an operation principle of a specific way of color display using combined operation of the display panel 10 and the backlight 30.

### [Display example in the past]

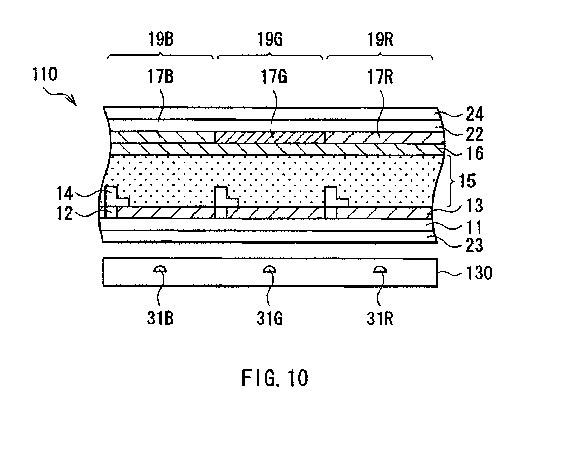

First, a typical configuration of a color display unit (color filter type) in the past, and typical display operation thereof are described for comparison. FIG. 10 shows a basic configuration example of the color display unit in the past. Components having the same functions as those of the color display unit shown in FIG. 1 are marked with the same reference numerals or signs. The color display unit has a display panel 110, and a backlight 130 opposed to the display panel 110 on a back side of the display panel 110. The backlight 130 includes three kinds of LEDs, i.e., red LED 31R, green LED 31G and blue LED 31B, each LED being able to be independently controlled in light emission. In the display panel 110, a portion corresponding to the full-color transmittable region 18 of the display panel 10 shown in FIG. 1 is a blue transmittable region 19B. In addition, a blue filter 17B is provided in place of the transparent filter 17C. That is, in the display panel 110, the full-color transmittable region 18 does not exist, and all regions are partially transmittable regions (a red transmittable region 19R, a green transmittable region 19G, and a blue transmittable region 19B).

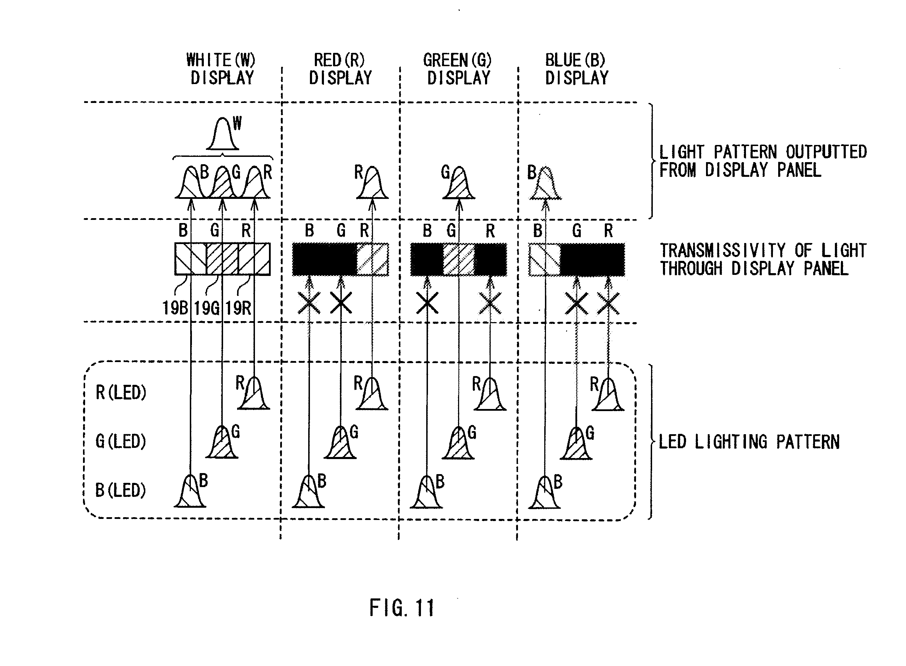

FIG. 11 schematically shows operation when white display, red display, green display, and blue display are performed in the case that the backlight 130 is used as a white backlight in the color display unit shown in FIG. 10. In FIG. 11, a bottom portion shows a lighting pattern of each LED of the backlight 130. In the example of FIG. 11, it is shown that since the backlight 130 is used as the white backlight, all of the red LED 31R, the green LED 31G and the blue LED 31B are continuously lit regardless of a color to be displayed. Respective color LED are appropriately adjusted in light emission balance so that composite white light is obtained. In FIG. 11, each mountain-shaped waveform schematically shows a color component of light. Height of the mountain-shaped waveform shows magnitude of luminance (intensity) of light. In the bottom portion of FIG. 11, three kinds of mountain-shaped waveforms of R, G and B, show color components of light emitted from the red LED 31R, the green LED 31G and the blue LED 31B respectively. In this example, the mountain-shaped waveforms of the respective color components have the same height, which means that the respective color LED are controlled to have approximately the same light emission quantity.

In FIG. 11, a middle portion shows a pattern of the transmissivity of the light through each pixel portion and a corresponding color filter portion of the display panel 110. That is, the middle portion shows a control pattern of the transmissivity of the light through each of the transmittable regions (the red transmittable region 19R, the green transmittable region 19G, and the blue transmittable region 19B). In FIG. 11, a top portion shows patterns of light after passing through the display panel 110. That is, the top portion shows patterns of color components being finally obtained in the color display unit.

In FIG. 11, an arrow line drawn from the bottom portion to the upside shows the transmissivity of the light beam of each color from each LED of the backlight 130. In the middle portion, a transmittable region marked with a black square shows a fact that the region is controlled to be non-light-transmittable in the display panel 110. In the middle portion, a cross mark added to an arrow shows a fact that color light indicated by the arrow does not pass through the display panel 110.

In FIG. 11, regions divided by broken lines in order from the left to the right show respective cases of color display shown in a top portion. FIG. 11 shows cases of white display, red display, green display, and blue display in order from the left to the right.

As described before, in a display example of FIG. 11, all kinds of LED of the backlight 130 are lit regardless of a color to be displayed. All the transmittable regions (the red transmittable region 19R, the green transmittable region 19G, and the blue transmittable region 19B) of the display panel 110 are controlled into light transmitting mode, thereby to achieve white display. Only the red transmittable region 19R in the transmittable regions of the display panel 110 is controlled into light transmitting mode, thereby to achieve red display. Only the green transmittable region 19G in the transmittable regions of the display panel 110 is controlled into light transmitting mode, thereby to achieve green display. Only the blue transmittable region 19B in the transmittable regions of the display panel 110 is controlled into light transmitting mode, thereby to achieve blue display.

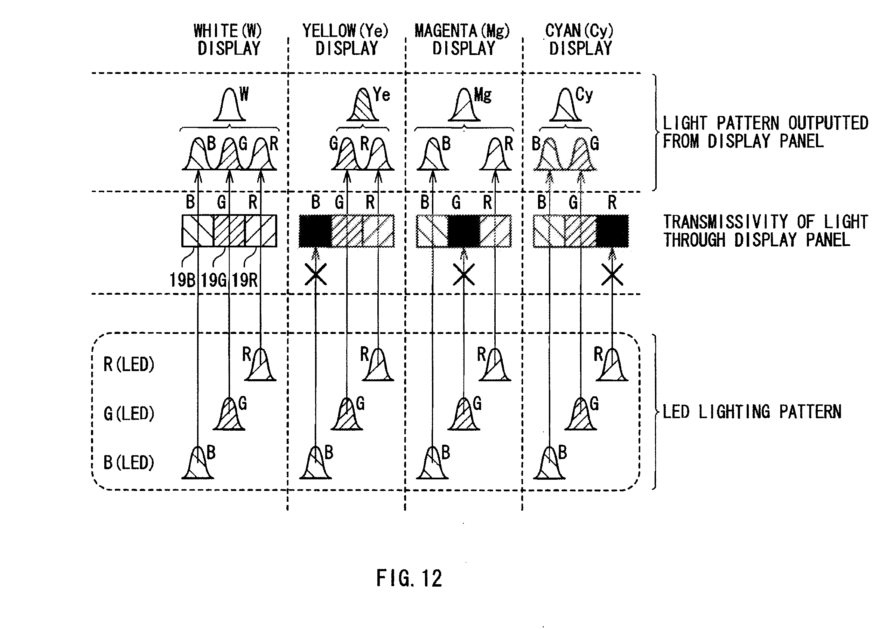

FIG. 12 schematically shows operation in the case of white display or complementary color display (yellow display, magenta display, or cyan display) when the backlight 130 is used as the white backlight. In FIG. 12, concepts of figures, marks and the like shown in the top, middle and bottom portions are the same as those in FIG. 11. Hereinafter, concepts of figures, marks and the like shown in similar diagrams are the same as those in FIG. 11.

In a display example of FIG. 12, all kinds of LED of the backlight 130 are lit regardless of a color to be displayed as in the display example of FIG. 11. All the transmittable regions (the red transmittable region 19R, the green transmittable region 19G, and the blue transmittable region 19B) of the display panel 110 are controlled into light transmitting mode, thereby to achieve white display. The red transmittable region 19R and the green transmittable region 19G in the transmittable regions of the display panel 110 are controlled into light transmitting mode, thereby to achieve yellow display. The red transmittable region 19R and the blue transmittable region 19B in the transmittable regions of the display panel 110 are controlled into light transmitting mode, thereby to achieve magenta display. The green transmittable region 19G and the blue transmittable region 19B in the transmittable regions of the display panel 110 are controlled into light transmitting mode, thereby to achieve cyan display.

In the display examples shown in FIGs. 11 and 12, while the RGB independent-light-emission LED are used, a lighting state of the backlight 130 is not different between respective color display, and color display is achieved only by controlling a display panel 110 side. Therefore, even when white LED is used, display operation is the same as operation in the display examples of FIGs. 11 and 12.

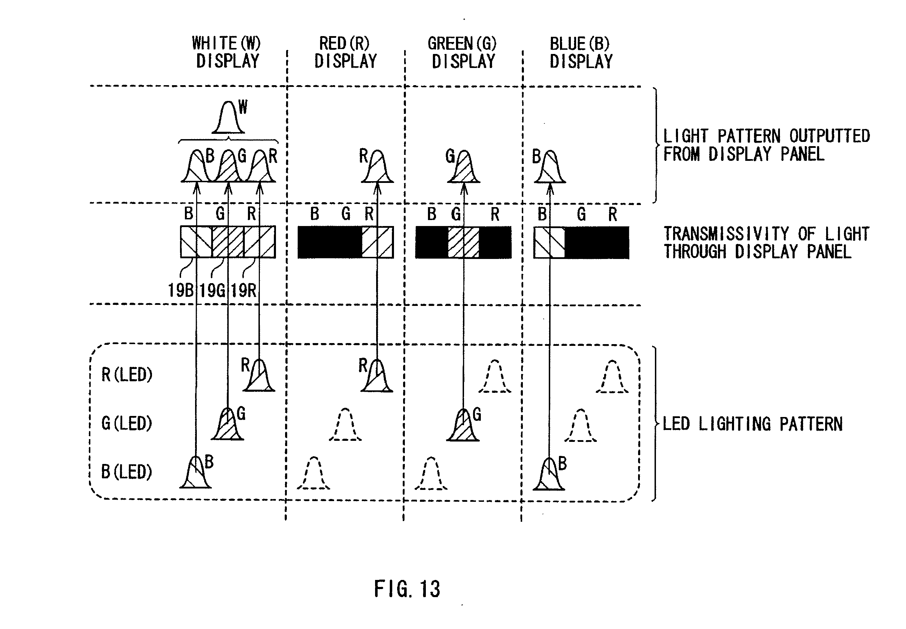

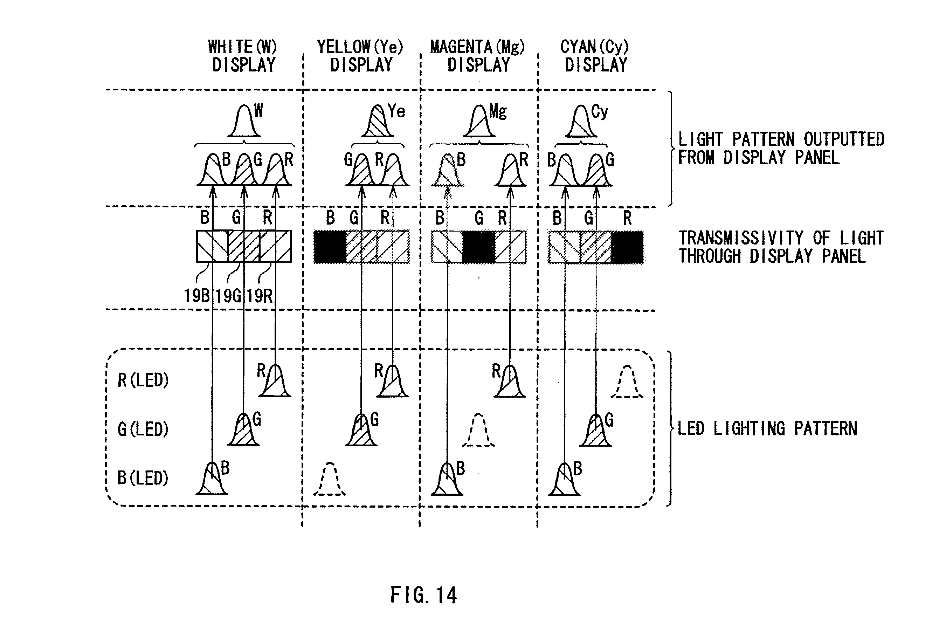

On the other hand, FIGs. 13 and 14 show display examples in the case that not only the display panel 110 but also a lighting state on a backlight 130 side are variably controlled for each color display in the color display unit shown in FIG. 10. In a bottom portion of each of FIGs. 13 and 14, a mountain-shaped waveform shown by a broken line means a fact that the relevant color LED is extinguished.

FIG. 13 schematically shows operation in the case that white display, red display, green display, and blue display are performed when a lighting state on a backlight 130 side is also variably controlled. In a display example of FIG. 13, when white display is performed, all the three kinds of LEDs (the red LED 31R, the green LED 31G, and the blue LED 31B) of the backlight 130 are lit. In addition, all the transmittable regions (the red transmittable region 19R, the green transmittable region 19G, and the blue transmittable region 19B) of the display panel 110 are controlled into light transmitting mode. Only the red LED 31R of the three kinds of LEDs is lit, and only the red transmittable region 19R in the transmittable regions of the display panel 110 is controlled into light transmitting mode, thereby to achieve red display. Only the green LED 31G of the three kinds of LEDs is lit, and only the green transmittable region 19G in the transmittable regions of the display panel 110 is controlled into light transmitting mode, thereby to achieve green display. Only the blue LED 31B of the three kinds of LEDs is lit, and only the blue transmittable region 19B in the transmittable regions of the display panel 110 is controlled into light transmitting mode, thereby to achieve blue display.

FIG. 14 schematically shows operation in the case that white display, and complementary color display (yellow display, magenta display, or cyan display) are performed when a lighting state on the backlight 130 side is also variably controlled. In a display example of FIG. 14, when white display is performed, all the three kinds of LEDs (the red LED 31R, the green LED 31G, and the blue LED 31B) of the backlight 130 are lit. In addition, all the transmittable regions (the red transmittable region 19R, the green transmittable region 19G, and the blue transmittable region 19B) of the display panel 110 are controlled into light transmitting mode. The red LED 31R and the green LED 31G of the three kinds of LEDs are lit, and the red transmittable region 19R and the green transmittable region 19G in the transmittable regions of the display panel 110 are controlled into light transmitting mode, thereby to achieve yellow display. The red LED 31R and the blue LED 31B of the three kinds of LEDs are lit, and the red transmittable region 19R and the blue transmittable region 19B in the transmittable regions of the display 110 are controlled into light transmitting mode, thereby to achieve magenta display. The green LED 31G and the blue LED 31B of the three kinds of LEDs are lit, and the green transmittable region 19G and the blue transmittable region 19B in the transmittable regions of the display panel 110 are controlled into light transmitting mode, thereby to achieve cyan display.

As shown in FIGs. 10 to 14, RGB color filters need to be used on the display panel 110 side in the previous color display unit of the color filter type. However, the blue filter 17B is low in transmittance as compared with other color filters as shown in FIG. 15. This is disadvantageous in the light of use efficiency of light.

### [First display example according to first embodiment (RGB display)]

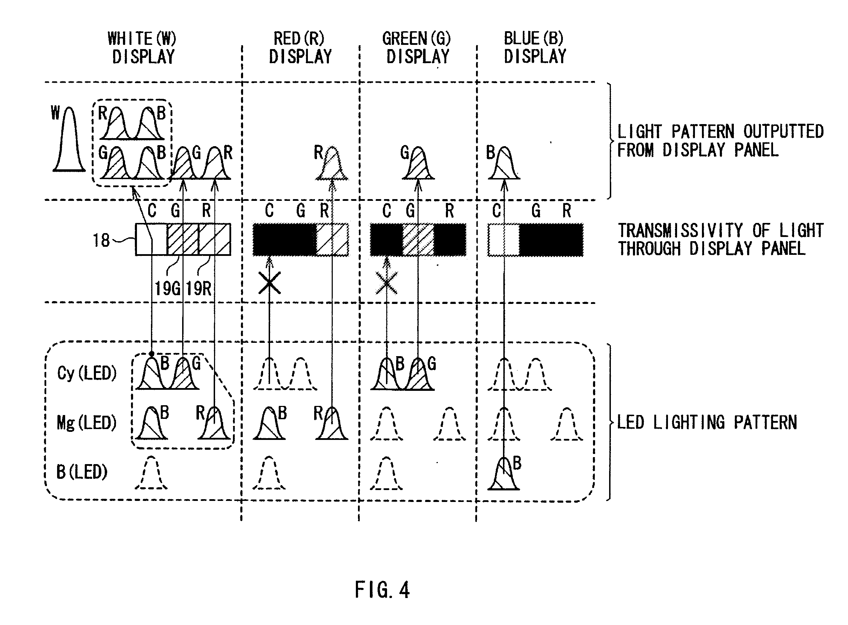

Next, display operation of the color display unit shown in FIG. 1 is described. FIG. 4 schematically shows operation in the case that white display, red display, green display, and blue display are performed. In a display example of FIG. 4, when white display is performed, the magenta LED 32 and the cyan LED 33 are lit among the three kinds of LEDs (the blue LED 31, the magenta LED 32, and the cyan LED 33) of the backlight 30. In addition, all the transmittable regions (the full-color transmittable region 18, the red transmittable region 19R, and the green transmittable region 19G) of the display panel 10 are controlled into light transmitting mode. Only the magenta LED 32 of the three kinds of LEDs is lit, and only the red transmittable region 19R in the transmittable regions of the display panel 10 is controlled into light transmitting mode, thereby to achieve red display. Only the cyan LED 33 of the three kinds of LEDs is lit, and only the green transmittable region 19G in the transmittable regions of the display panel 10 is controlled into light transmitting mode, thereby to achieve green display. Only the blue LED 31 of the three kinds of LEDs is lit, and only the full-color transmittable region 18 in the transmittable regions of the display panel 10 is controlled into light transmitting mode, thereby to achieve blue display.

### [Second display example according to first embodiment (complementary color display)]

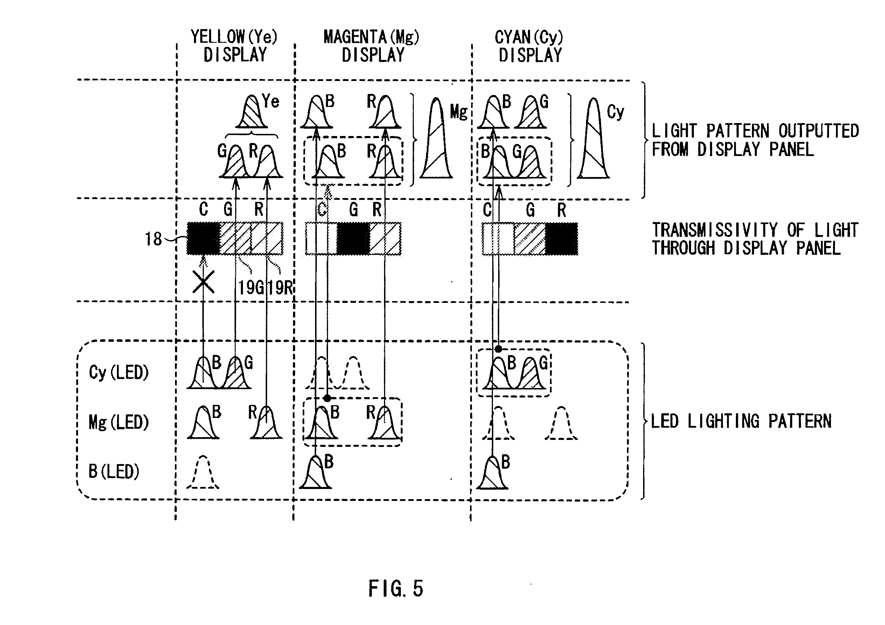

FIG. 5 schematically shows operation in the case that complementary color display (yellow display, magenta display, and cyan display) is performed by the color display unit shown in FIG. 1. When white display is performed, operation is the same as in FIG. 4 while it is not shown in FIG. 5. In a display example of FIG. 5, when yellow display is performed, the magenta LED 32 and the cyan LED 33 are lit among the three kinds of LEDs. In addition, the red transmittable region 19R and the green transmittable region 19G in the transmittable regions of the display panel 10 is controlled into light transmitting mode. The blue LED 31 and the magenta LED 32 of the three kinds of LEDs are lit, and the full-color transmittable region 18 and the red transmittable region 19R in the transmittable regions of the display panel 10 are controlled into light transmitting mode, thereby to achieve magenta display. The blue LED 31 and the cyan LED 33 of the three kinds of LEDs are lit, and the full-color transmittable region 18 and the green transmittable region 19G in the transmittable regions of the display panel 10 are controlled into light transmitting mode, thereby to achieve cyan display.

In the display examples shown in FIGs. 4 and 5, complementary color LED are used, and a portion corresponding to the blue filter 17B in the previous structure is made transparent, thereby use efficiency of light is increased as compared with the previous display method shown in FIGs. 10 to 14, leading to brighter display. For example, in the case of white display, when it is assumed that color filters have small passing loss, brightness about twice the brightness in the past may be obtained. As described before, height of a mountain-shaped waveform portion shows magnitude of luminance (intensity) of light in FIGs. 4 and 5, and FIGs. 11 to 14. In white display shown in FIG. 4, height of the mountain-shaped waveform portion is about twice as large as the height in other color display, showing brightness being approximately doubled. Moreover, since the blue filter 17B is not used, use efficiency of light in blue display may be increased as compared with the previous display method.

As described hereinbefore, according to the color display unit of the present embodiment, since the blue LED 31 and the blue-excited complementary-color LED are used for the backlight 30, luminous efficiency is high as compared with the case of using the ultraviolet-excited LED, and a short afterglow characteristic may be obtained. Particularly, since a short red afterglow characteristic may be obtained, the color display unit may be applied to blinking backlight in which, for example, on/off control of the backlight 30 is performed in a time-shared manner within one frame. Moreover, since the blue LED and the complementary color LED are independently controlled in light emission, color balance or color temperature may be adjusted by appropriately adjusting the quantity of light emission of each LED, so that change in color tone with time may be corrected. Moreover, since the display panel 10 is structured to be unnecessary to use the blue filter, use efficiency of light may be increased as compared with the previous type using the RGB color filters even in the light of a structure of the display panel 10. Thus, color display may be achieved, which is high in use efficiency of light and is stable as compared with the previous type using the RGB color filters.

Moreover, according to the color display unit, since light intensity may be controlled for each color as in the case of using the RGB independent-light-emission backlight, only the minimum necessary number of LED need to be lit, leading to reduction in power consumption. Moreover, color temperature may be adjusted on a light source side. The RGB independent-light-emission backlight without phosphors has a large variation in wavelength of emitted light because a semiconductor element itself varies in band gap during manufacturing. In contrast, phosphors are slight in variation in band gap. According to the color display unit, since light wavelength conversion is performed using the phosphor in the blue-excited complementary-color LED, variation in wavelength may be suppressed between LED having the same color. Therefore, when the backlight 30 is designed to be a flat light source by using a large number of LED, the color display unit is advantageous for uniforming characteristics of the backlight. Particularly, when monochromatic display is performed, unevenness in display is decreased, and thus uniformity may be improved. In addition, according to the color display unit, since only a single semiconductor element, i.e., the blue LED, is used, the unit is advantageously stable against in-plane unevenness of uniformity caused by light source temperature.

### [Second Embodiment]

Next, a color display unit according to a second embodiment of the invention is described. Substantially the same components as in the color display unit according to the first embodiment are marked with the same reference numerals or signs, and description of them is appropriately omitted.

### [Basic configuration of color display unit]

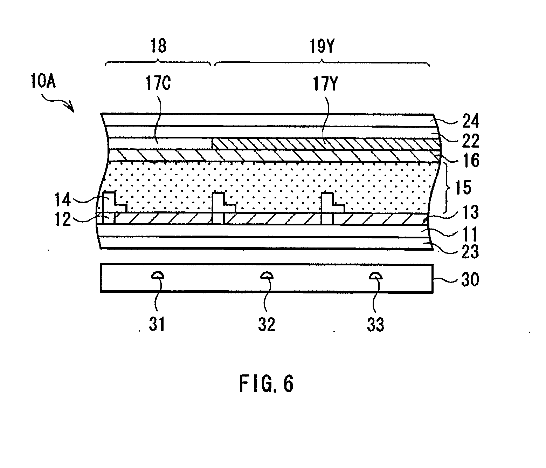

FIG. 6 shows a configuration example of the color display unit according to the present embodiment. In this color display unit, the partially transmittable region 19 (the red transmittable region 19R and the green transmittable region 19G) of the color display unit shown in FIG. 1 is replaced by a yellow transmittable region 19Y. In addition, a yellow color filter 17Y is provided in place of the red filter 17R and the green filter 17G. The yellow filter 17Y is transparent to yellow light, namely, transparent to red light and green light, and opaque to blue light. The yellow filter 17Y is provided in correspondence to the yellow transmittable region 19Y. Thus, the yellow transmittable region 19Y is opaque to blue light in color components of light emitted from the backlight 30, and may transmit both red light and green light. A display panel 10A of the color display unit is designed such that the transmissivity of the light may be independently controlled for each of the full-color transmittable region 18 and the yellow transmittable region 19Y.

In this color display unit, two pixel electrodes 13 are allocated to the yellow transmittable region 19Y. In contrast, the full-color transmittable region 18 is allocated with one pixel electrode 13. Therefore, area of the yellow transmittable region 19Y is twice as large as area of the full-color transmittable region 18. That is, area of the yellow filter 17Y is twice as large as area of the transparent filter 17C.

### [Configuration of image display device]

When this color display unit is used for a TV image display device or the like, a pixel structure section of the display panel 10A shown in FIG. 6 may be formed in a two-dimensional matrix pattern as in the first embodiment. In this case, a structural portion of the display panel 10A shown in FIG. 6 corresponds to a structure of one pixel. The backlight 30 may be structured such that a plurality of blue LED 31, a plurality of magenta LED 32, and a plurality of cyan LED 33 are arranged in a two-dimensional matrix pattern respectively so that the whole surface of the display panel 10A may be sufficiently illuminated by the backlight for each of the color components.

In the color display unit according to the present embodiment, drive control of the display panel 10A and light emission control of the backlight 30 are synchronously performed by a display method described later, so that, for example, RGB color display may be performed in a time-shared manner. Therefore, when the color display unit is used as an image display device, color image display may be performed by the field sequential method or the like as in the first embodiment. When the field sequential method is used, a control circuit may be provided, which synchronously controls operation of the display panel 10A and operation of the backlight 30.

### [First display example according to second embodiment (RGB display)]

Next, display operation of the color display unit shown in FIG. 6 is described.

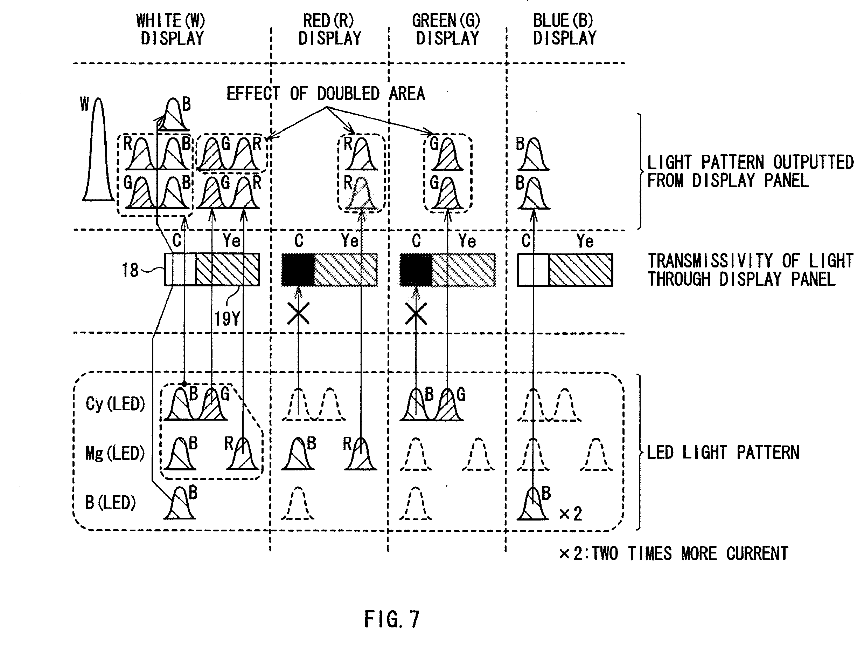

FIG. 7 schematically shows operation in the case that white display, red display, green display, and blue display are performed. In a display example of FIG. 7, when white display is performed, all the three kinds of LEDs (the blue LED 31, the magenta LED 32, and the cyan LED 33) of the backlight 30 are lit. In addition, all the transmittable regions (the full-color transmittable region 18 and the yellow transmittable region 19Y) of the display panel 10A are controlled into light transmitting mode. Only the magenta LED 32 of the three kinds of LEDs is lit, and only the yellow transmittable region 19Y in the transmittable regions of the display panel 10A is controlled into light transmitting mode, thereby to achieve red display. Only the cyan LED 33 of the three kinds of LEDs is lit, and only the yellow transmittable region 19Y in the transmittable regions of the display panel 10A is controlled into light transmitting mode, thereby to achieve green display. Only the blue LED 31 of the three kinds of LEDs is lit, and all the transmittable regions of the display panel 10A are controlled into light transmitting mode, thereby to achieve blue display.

In the color display unit shown in FIG. 6, since area of the yellow filter 17Y is twice as large as area of the transparent filter 17C, transmission amount of each of red and green light may be doubled compared as with the color display unit shown in FIG. 1. Thus, use efficiency of light may be increased in each color display, leading to brighter display. In the display example of FIG. 7, for example, in the case of white display, when it is assumed that color filters have small passing loss, brightness, which is about three times as high as the brightness in the previous display method as shown in FIGs. 10 to 14, may be obtained. In red display and green display, brightness, which is about twice as high as the brightness in the display example of FIG. 4, may be obtained. In contrast, in blue display, since blue light may not be transmitted by the yellow filter 17Y, even if area of the yellow filter 17Y is doubled, no effect may be obtained thereby. Therefore, in the case of blue display, it is preferable that the amount of current through the blue LED 31 be approximately doubled so that the quantity of light emitted by the blue LED 31 is approximately doubled. Thus, colors may be balanced between red or green display and blue display.

### [Second display example according to second embodiment (complementary color display)]

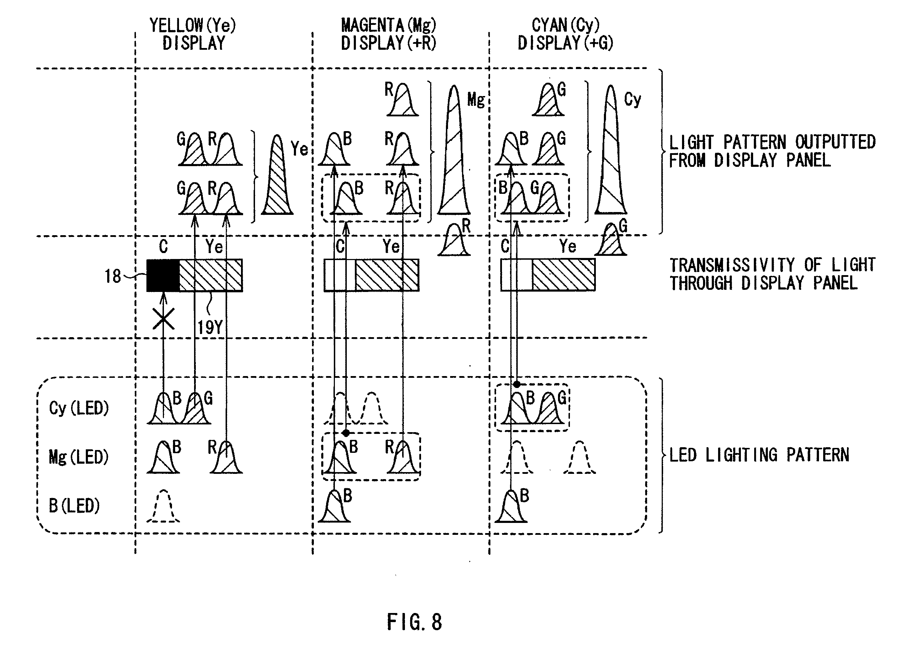

FIG. 8 schematically shows operation in the case that complementary color display (yellow display, magenta display, and cyan display) is performed by the color display unit shown in FIG. 6. When white display is performed, operation is the same as in FIG. 7 while it is not shown in FIG. 8. In a display example of FIG. 8, the magenta LED 32 and the cyan LED 33 of the three kinds of LEDs are lit, and only the yellow transmittable region 19Y in the transmittable regions of the display panel 10A is controlled into light transmitting mode, thereby to achieve yellow display. The blue LED 31 and the magenta LED 32 of the three kinds of LEDs are lit, and all the transmittable regions of the display panel 10A are controlled into light transmitting mode, thereby to achieve magenta display. The blue LED 31 and the cyan LED 33 of the three kinds of LEDs are lit, and all the transmittable regions of the display panel 10A are controlled into light transmitting mode, thereby to achieve cyan display.

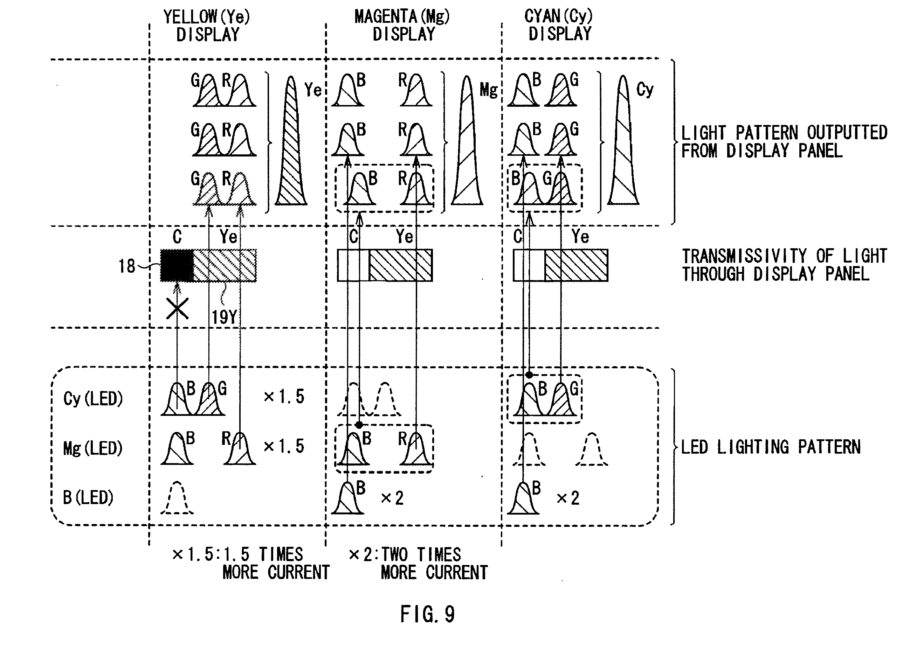

In the display example of FIG. 8, since the yellow filter 17Y having a doubled area is used, particularly brightness in yellow display may be approximately doubled as compared with the display example of FIG. 5. In contrast, in magenta display, when it is assumed that the quantity of light emitted from respective color LED are the same, red light becomes excessive as compared with the display example of FIG. 5. In cyan display, when it is assumed that the quantity of light emitted from respective color LED are the same, green light becomes excessive as compared with the display example of FIG. 5. Therefore, light emission balance is preferably adjusted between respective color LED in a way as shown in FIG. 9.

In the display example shown in FIG. 9, when yellow display is performed, the amount of current through each of the magenta LED 32 and the cyan LED 33 is increased about 1.5 times so that the quantity of light emitted from each of the magenta LED 32 and the cyan LED 33 is increased about 1.5 times as compared with the display example of FIG. 8. When magenta display is performed, the amount of current through the blue LED 31 is approximately doubled so that the quantity of light emitted from the blue LED 31 is approximately doubled. Similarly, when cyan display is performed, the amount of current through the blue LED 31 is approximately doubled so that the quantity of light emitted from the blue LED 31 is approximately doubled. In this way, light emission balance is adjusted between the respective color LED. Thus, color balance of finally obtained light may be appropriately adjusted. In addition, brightness in each color display may be approximately tripled as compared with the previous display example shown in FIG. 12 for example.

As described hereinbefore, according to the color display unit of the present embodiment, since the yellow filter 17Y having a doubled area is used, further bright color display may be performed as compared with the color display unit according to the first embodiment.

### [Third Embodiment]

Next, a color display unit according to a third embodiment of the invention is described. Substantially the same components as in the color display unit according to the first or second embodiment are marked with the same reference numerals or signs, and description of them is appropriately omitted.

### [Basic configuration of color display unit]

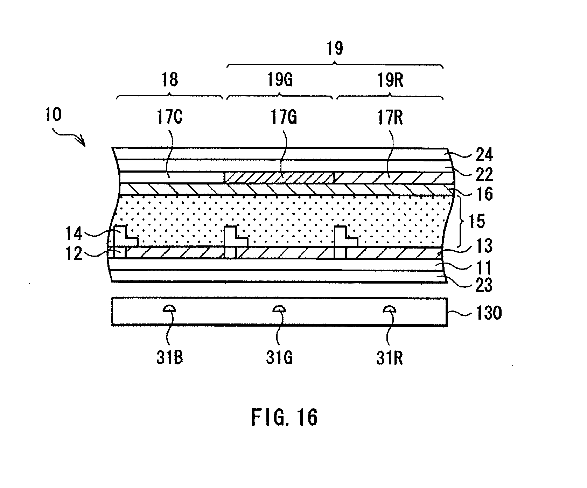

FIG. 16 shows a configuration example of the color display unit according to the present embodiment. This color display unit has a backlight 130 in place of the backlight 30 of the color display unit shown in FIG. 1. The backlight 130 includes three kinds of LEDs, i.e., red LED 31R, green LED 31G, and blue LED 31B, each LED being able to be independently controlled in light emission. The three kinds of LEDs are semiconductor light emitting elements of three primary colors emitting the primary color light respectively. That is, while the complementary color LED are partially used as light sources in the color display unit shown in FIG. 1, primary color LED are used for all light sources instead of the complementary color LED in the present embodiment. Moreover, the color display unit is different from the display device having the previous structure as shown in FIG. 10, in that the transparent filter 17C is provided in place of the blue filter 17B so that a portion corresponding to the blue transmittable region 19B is provided as the full-color transmittable region 18.

### [Configuration of image display device]

When this color display unit is used for a TV image display device or the like, a pixel structure section of the display panel 10 shown in FIG. 16 may be formed in a two-dimensional matrix pattern as in the first embodiment. In this case, a structural portion of the display panel 10 shown in FIG. 16 corresponds to a structure of one pixel. The backlight 130 may be structured such that a plurality of red LED 31R, a plurality of green LED 31G, and a plurality of blue LED 31B are arranged in a two-dimensional matrix pattern respectively so that the whole surface of the display panel 10 may be sufficiently illuminated by the backlight for each of the color components.

In the color display unit according to the present embodiment, drive control of the display panel 10 and light emission control of the backlight 130 are synchronously performed by a display method described below, so that, for example, RGB color display may be performed in a time-shared manner. Therefore, when the color display unit is used as an image display device, color image display may be performed by a field sequential method or the like as in the first embodiment. When the field sequential method is used, a control circuit may be provided, which synchronously controls operation of the display panel 10 and operation of the backlight 130.

### [First display example according to third embodiment (first example of RGB display)]

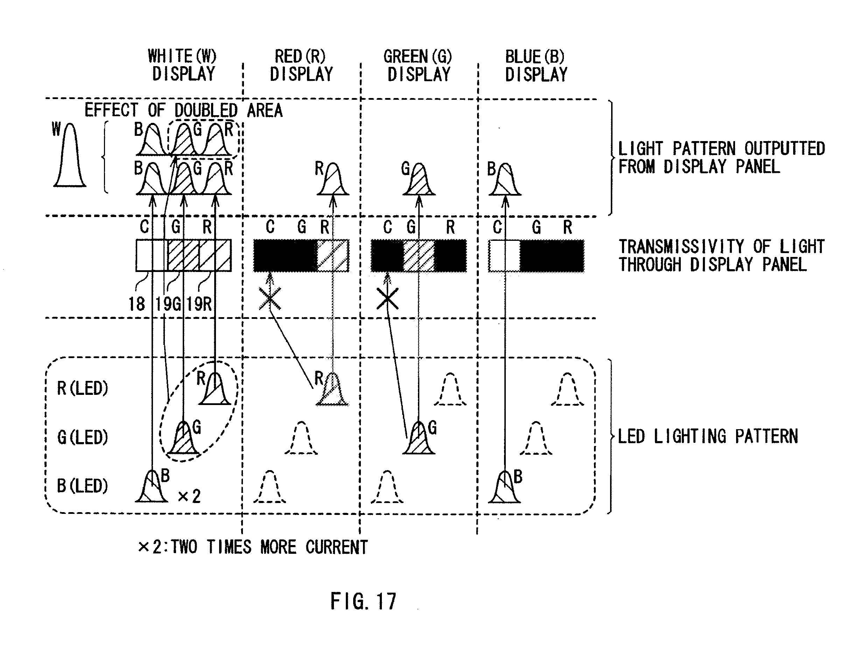

FIG. 17 schematically shows operation in the case that white display, red display, green display, and blue display are performed by the color display unit shown in FIG. 16. In a display example of FIG. 17, when white display is performed, all the three kinds of LEDs (the red LED 31R, the green LED 31G, and the blue LED 31B) of the backlight 130 are lit. In addition, all the transmittable regions (the full-color transmittable region 18, the red transmittable region 19R, and the green transmittable region 19G) of the display panel 10 are controlled into light transmitting mode. Only the red LED 31R of the three kinds of LEDs is lit, and only the red transmittable region 19R in the transmittable regions of the display panel 10 is controlled into light transmitting mode, thereby to achieve red display. Only the green LED 31G of the three kinds of LEDs is lit, and only the green transmittable region 19G in the transmittable regions of the display panel 10 is controlled into light transmitting mode, thereby to achieve green display. Only the blue LED 31B of the three kinds of LEDs is lit, and only the full-color transmittable region 18 in the transmittable regions of the display panel 10 is controlled into light transmitting mode, thereby to achieve blue display.

In the display example of FIG. 17, a portion corresponding to the blue filter 17B in the previous structure is made transparent to be the full-color transmittable region 18, thereby use efficiency of light may be increased as compared with the previous type using all the RGB color filters. Particularly, since the blue filter 17B having low transmittance as compared with other color filters need not be used, use efficiency of blue light is highly effectively increased. Particularly, in the case of white display, when it is assumed that color filters have small passing loss, brightness, which is about twice the brightness in the previous display example having the blue filter 17B (for example, refer to FIG. 13), may be obtained. In the display example of FIG. 17, since the transparent filter 17C is used in place of the blue filter 17B, when white display is performed, transmission amount of red or green light may be doubled as compared with the display example of FIG. 13 for example. The reason for this is that, for example, in the case of red light, since the red light is transmitted by not only the red transmittable region 19R but also the full-color transmittable region 18, passing area of light is doubled as compared with the previous case. However, in the case of blue light, since a passing region of blue light is only the full-color transmittable region 18, passing area of light is not doubled. Therefore, in the case of white display, it is preferable that the amount of current through the blue LED 31B be approximately doubled so that the quantity of light emitted by the blue LED 31B is approximately doubled. Thus, brightness may be doubled in white display.

### [Second display example according to third embodiment (second example of RGB display)]

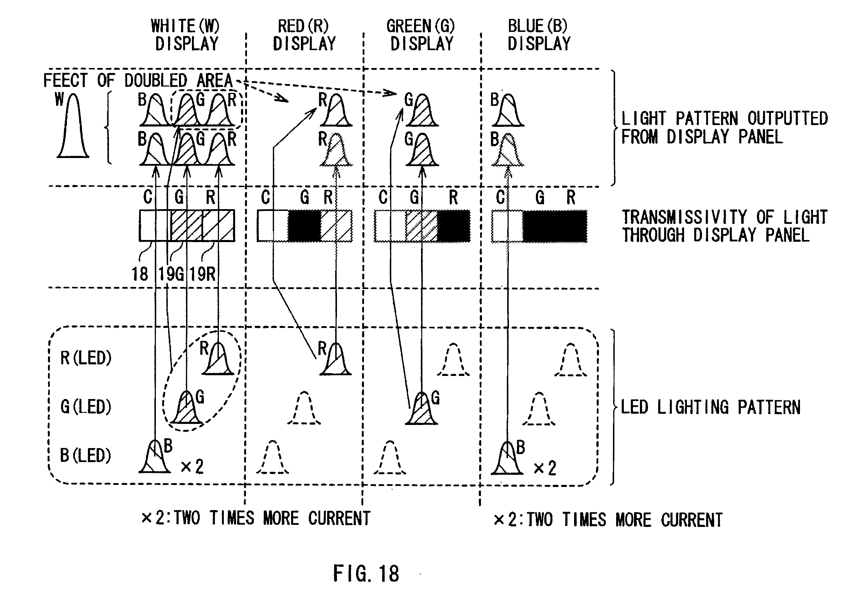

In the display example of FIG. 17, brightness about twice the brightness in the previous display example (for example, refer to FIG. 13) is obtained only in white display. In a display example of FIG. 18, about doubled brightness may be obtained even in red display, green display, and blue display. Operation in white display is the same as in the display example of FIG. 17. In the display example of FIG. 18, only the red LED 31R of the three kinds of LEDs is lit, and the red transmittable region 19R and the full-color transmittable region 18 in the transmittable regions of the display panel 10 are controlled into light transmitting mode, thereby to achieve red display. Only the green LED 31G of the three kinds of LEDs is lit, and the green transmittable region 19G and the full-color transmittable region 18 in the transmittable regions the display panel 10 are controlled into light transmitting mode, thereby to achieve green display. Only the blue LED 31B of the three kinds of LEDs is lit, and only the full-color transmittable region 18 8 in the transmittable regions of the display panel 10 is controlled into light transmitting mode, thereby to achieve blue display. In the case of the blue display, the amount of current through the blue LED 31B is approximately doubled so that the quantity of light emitted by the blue LED 31B is approximately doubled.

In the display example of FIG. 18, in the case of red display, since red light is transmitted by not only the red transmittable region 19R but also the full-color transmittable region 18, passing area of light in red display is doubled as compared with the previous case. Similarly, in the case of green display, since green light is transmitted by not only the green transmittable region 19G but also the full-color transmittable region 18, passing area of light in green display is doubled as compared with the previous case. In the case of blue display, since a passing region of light is only the full-color transmittable region 18, passing area of light is not doubled. However, the quantity of light emitted by the blue LED 31B is approximately doubled, so that brightness may be doubled. In this way, brightness in each color display may be approximately doubled as compared with the previous display example as shown in FIG. 13 for example.

### [Third display example according to third embodiment (complementary color display)]

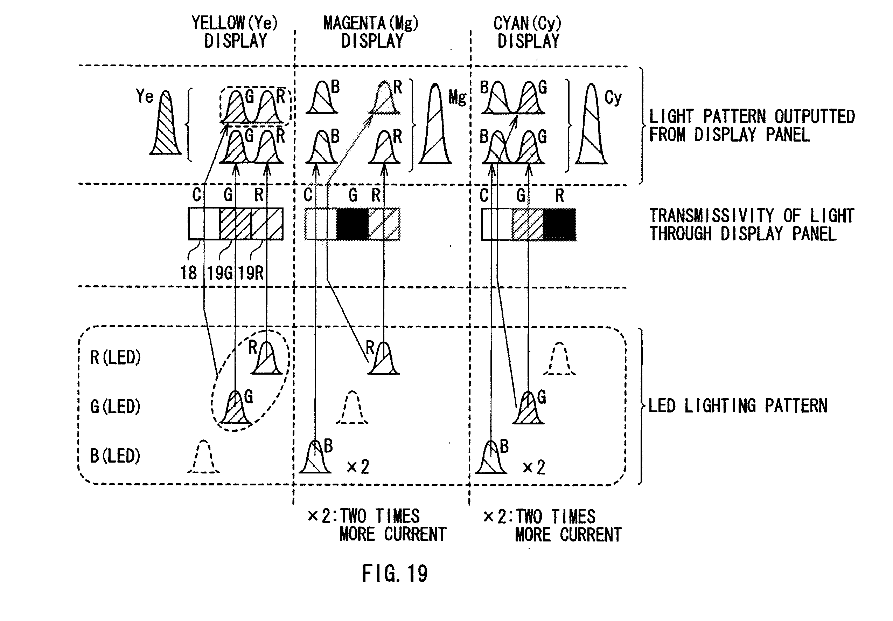

FIG. 19 schematically shows operation in the case that white display and complementary color display (yellow display, magenta display, and cyan display) are performed by the color display unit shown in FIG. 16. When white display is performed, operation is the same as in the display example of FIG. 17. In a display example of FIG. 19, when yellow display is performed, the red LED 31R and the green LED 31G are lit among the three kinds of LEDs. In addition, all the transmittable regions (the full-color transmittable region 18, the red transmittable region 19R, and the green transmittable region 19G) of the display panel 10 are controlled into light transmitting mode. The red LED 31R and the blue LED 31B of the three kinds of LEDs are lit, and the red transmittable region 19R and the full-color transmittable region 18 in the transmittable regions of the display panel 10 are controlled into light transmitting mode, thereby to achieve magenta display. The green LED 31G and the blue LED 31B of the three kinds of LEDs are lit, and the green transmittable region 19G and the full-color transmittable region 18 in the transmittable regions of the display panel 10 are controlled into light transmitting mode, thereby to achieve cyan display.

In the display example of FIG. 19, since the transparent filter 17C is used in place of the blue filter 17B, transmission amount of red or green light may be doubled as compared with the display example of FIG. 14 for example. For example, in the case of yellow display, red light is transmitted by not only the red transmittable region 19R but also the full-color transmittable region 18. In addition, green light is transmitted by not only the green transmittable region 19G but also the full-color transmittable region 18. Thus, passing area of light in yellow display is doubled as compared with the previous case. In the case of magenta display, while red light is doubled in light passing area as compared with the previous case, blue light is not doubled in light passing area because its light passing region is only the full-color transmittable region 18. Similarly, in the case of cyan display, while green light is doubled in light passing area as compared with the previous case, blue light is not doubled in light passing area. Therefore, even in magenta or cyan display, it is preferable that the amount of current through the blue LED 31B be approximately doubled so that the quantity of light emitted by the blue LED 31B is approximately doubled as in the case of white display. Thus, brightness may be approximately doubled in each color display as compared with the previous display example as shown in FIG. 14 for example.

Since light emission of each color LED may be independently controlled in the display examples of FIGs. 17 to 19, color balance or color temperature may be finely adjusted in each color display by appropriately adjusting the quantity of light emitted by each color LED.

### [Modification of Third Embodiment]

While FIG. 16 shows a configuration where red and green, two kinds of color transmittable regions (the red transmittable region 19R and the green transmittable region 19G) are provided as the partially transmittable region 19, and a portion corresponding to the previous blue transmittable region is made transparent to be the full-color transmittable region 18, a portion to be made transparent may not be the portion corresponding to the blue region.

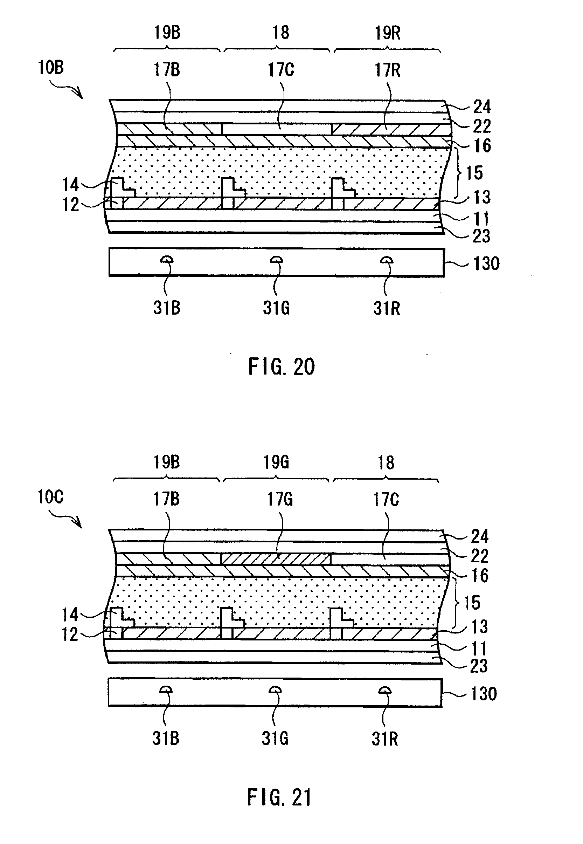

FIG. 20 shows a display device different from the display device having the previous structure as shown in FIG. 10, in that it has a display panel 10B using a transparent filter 17C in place of the green filter 17G. The transparent filter 17C is used, thereby a portion corresponding to the green transmittable region 19G is made transparent to be the full-color transmittable region 18. The display device has red and blue, two kinds of color transmittable regions (the red transmittable region 19R and the blue transmittable region 19B) as the partially transmittable region 19.

FIG. 21 shows a display device different from the display device having the previous structure as shown in FIG. 10, in that it has a display panel 10C using a transparent filter 17C in place of the red filter 17R. The transparent filter 17C is used, thereby a portion corresponding to the red transmittable region 19R is made transparent to be the full-color transmittable region 18. The display device has blue and green, two kinds of color transmittable regions (the blue transmittable region 19B and the green transmittable region 19G) as the partially transmittable region 19.

The color display unit shown in FIG. 20 or FIG. 21 is different from the configuration example of FIG. 16 only in a portion to be the full-color transmittable region 18, and is basically the same in basic operation of color display as that in the configuration example of FIG. 16. Even by a configuration of the color display unit shown in FIG. 20 or FIG. 21, since a color filter is partially made transparent, use efficiency of light may be improved as compared with the previous type using all the RGB color filters. Even if the color filter is partially made transparent in this way, the quantity of light emitted by each color LED is appropriately adjusted, thereby color balance or color temperature may be appropriately controlled.

### [Fourth Embodiment]

Next, a color display unit according to a fourth embodiment of the invention is described. Substantially the same components as in the color display unit according to each of the first to the third embodiments are marked with the same reference numerals or signs, and description of them is appropriately omitted.

### [Basic configuration of color display unit]

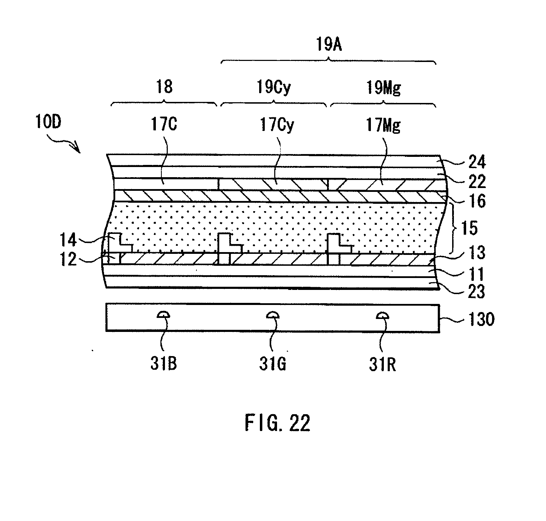

FIG. 22 shows a configuration example of the color display unit according to the present embodiment. The color display unit has a display panel 10D in which the partially transmittable region 19 (the red transmittable region 19R and the green transmittable region 19G) of the color display unit shown in FIG. 16 is replaced by a complementary color, partially transmittable region 19A. The display panel 10D has a magenta filter 17Mg in place of the red filter 17R and a cyan filter 17Cy in place of the green filter 17G. The partially transmittable region 19A includes two kinds of color transmittable regions of a cyan transmittable region 19Cy and a magenta transmittable region 19Mg. The magenta filter 17Mg is provided in correspondence to the magenta transmittable region 19Mg. The cyan filter 17Cy is provided in correspondence to the cyan transmittable region 19Cy. In the display panel 10D, since pixel electrodes 13 are provided in correspondence to the full-color transmittable region 18, the cyan transmittable region 19Cy, and the magenta transmittable region 19Mg respectively, the transmissivity of the light may be independently controlled for each transmittable region.

The magenta transmittable region 19Mg may transmit magenta light, namely, may transmit red light and blue light. Red light alone, blue light alone, or both red light and blue light (namely, magenta light) may be extracted from the magenta transmittable region 19Mg depending on a combination of LED in the backlight 130.

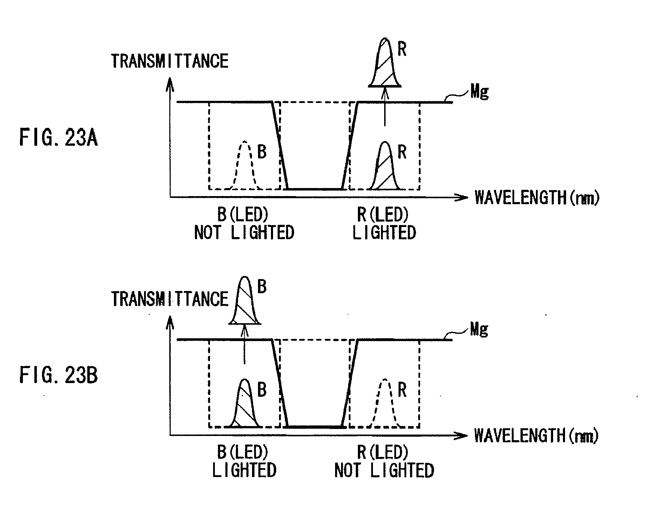

FIGs. 23A and 23B show a concept of transmission band selection by using the magenta transmittable region 19Mg. FIG. 23A shows a case of extracting red light, while FIG. 23B shows a case of extracting blue light. In FIGs. 23A and 23B, a transmittance characteristic of the magenta filter 17Mg, and a lighting state of each of the red LED 31R and the blue LED 31B are represented together. Since green light may not be transmitted by the magenta filter 17Mg, a lighting state of the green LED 31G is omitted to be shown. As shown in FIG. 23A, when the blue LED 31B is not lit, and the red LED 31R is lit, red light may be singly extracted from the magenta transmittable region 19Mg. As shown in FIG. 23B, when the red LED 31R is not lit, and the blue LED 31B is lit, blue light may be singly extracted from the magenta transmittable region 19Mg. When red light and blue light are extracted together, the red LED 31R and the blue LED 31B may be lit together.

The cyan transmittable region 19Cy may transmit cyan light, namely, may transmit green light and blue light. Green light alone, blue light alone, or both green light and blue light (namely, cyan light) may be extracted from the cyan transmittable region 19Cy depending on a combination of LED in the backlight 130.

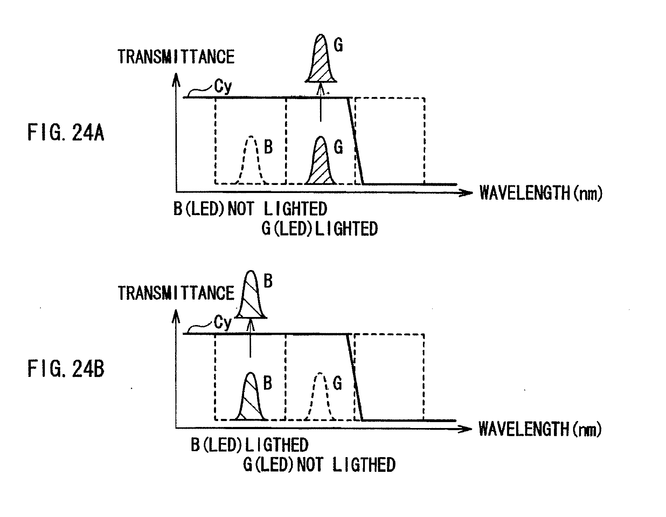

FIGs. 24A and 24B show a concept of transmission band selection by using the cyan transmittable region 19Cy. FIG. 24A shows a case of extracting green light, while FIG. 24B shows a case of extracting blue light. In FIGs. 24A and 24B, a transmittance characteristic of the cyan filter 17Cy, and a lighting state of each of the green LED 31G and the blue LED 31B are represented together. Since red light may not be transmitted by the cyan filter 17Cy, a lighting state of the red LED 31R is omitted to be shown. As shown in FIG. 24A, when the blue LED 31B is not lit, and the green LED 31G is lit, green light may be singly extracted from the cyan transmittable region 19Cy. As shown in FIG. 24B, when the green LED 31G is not lit, and the blue LED 31B is lit, blue light may be singly extracted from the cyan transmittable region 19Cy. When green light and blue light are extracted together, the green LED 31G and the blue LED 31B may be lit together.

### [Configuration of image display device]

When this color display unit is used for a TV image display device or the like, a pixel structure section of the display panel 10D shown in FIG. 22 may be formed in a two-dimensional matrix pattern as in the first embodiment. In this case, a structural portion of the display panel 10D shown in FIG. 22 corresponds to a structure of one pixel. The backlight 130 may be structured such that a plurality of red LED 31R, a plurality of green LED 31G, and a plurality of blue LED 31B are arranged in a two-dimensional matrix pattern respectively so that the whole surface of the display panel 10D may be sufficiently illuminated by the backlight for each of the color components.

In the color display unit according to the present embodiment, drive control of the display panel 10D and light emission control of the backlight 130 are synchronously performed by a display method described below, so that, for example, RGB color display may be performed in a time-shared manner. Therefore, when the color display unit is used as an image display device, color image display may be performed by a field sequential method or the like as in the first embodiment. When the field sequential method is used, a control circuit may be provided, which synchronously controls operation of the display panel 10D and operation of the backlight 130.

### [First display example according to fourth embodiment (RGB display)]

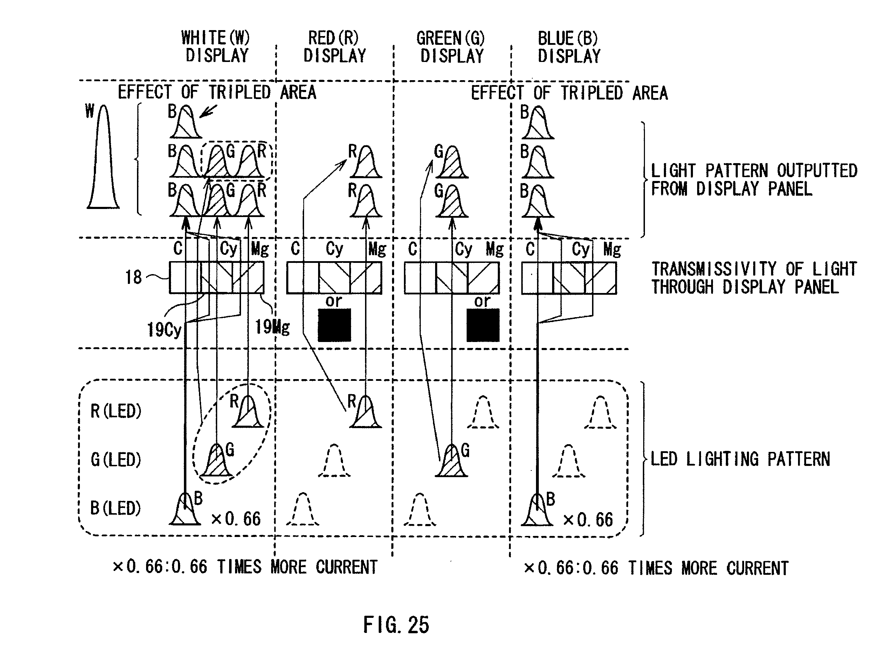

FIG. 25 schematically shows operation in the case that white display, red display, green display, and blue display are performed by the color display unit shown in FIG. 22. In a display example of FIG. 25, when white display is performed, all the three kinds of LEDs (the red LED 31R, the green LED 31G, and the blue LED 31B) of the backlight 130 are lit. In addition, all the transmittable regions (the full-color transmittable region 18, the cyan transmittable region 19Cy, and the magenta transmittable region 19Mg) of the display panel 10D are controlled into light transmitting mode. Only the red LED 31R of the three kinds of LEDs is lit, and at least the magenta transmittable region 19Mg and the full-color transmittable region 18 in the transmittable regions of the display panel 10D are controlled into light transmitting mode, thereby to achieve red display. In the red display mode, since red light may not be originally transmitted by the cyan filter 17Cy, transmissivity of the light in the display panel 10D may be controlled into either light-transmitting mode or non- light-transmitting mode. Only the green LED 31G of the three kinds of LEDs is lit, and the cyan transmittable region 19Cy and the full-color transmittable region 18 in the transmittable regions of the display panel 10D are controlled into light transmitting mode, thereby to achieve green display. In the green display mode, since green light may not be originally transmitted by the magenta filter 17Mg, transmissivity of the light in the display panel 1OD may be controlled into either light-transmitting mode or non-light-transmitting mode. Only the blue LED 31B of the three kinds of LEDs is lit, and all the transmittable regions of the display panel 10D are controlled into light transmitting mode, thereby to achieve blue display.

In the display example of FIG. 25, a portion corresponding to the blue filter 17B in the previous structure is made transparent to be the full-color transmittable region 18, thereby use efficiency of light may be increased as compared with the previous type using all the RGB color filters (for example, refer to FIG. 13). Particularly, since the blue filter 17B having low transmittance as compared with other color filters need not be used, use efficiency of blue light is highly effectively increased. In the display example of FIG. 25, since the transparent filter 17C is used in place of the blue filter 17B, when white display is performed, transmission amount of each of red and green light may be doubled as compared with the display example of FIG. 13 for example. The reason for this is that, for example, in the case of red light, since the red light is transmitted by not only the magenta transmittable region 19Mg but also the full-color transmittable region 18, passing area of light is doubled as compared with the previous case. Furthermore, since blue light passes through all the regions of the full-color transmittable region 18, the cyan transmittable region 19Cy, and the magenta transmittable region 19Mg, passing area of light is tripled as compared with the display example of FIG. 13. In this case, since only blue light is excessively increased in transmission amount, it is preferable that, for example, the amount of current through the blue LED 31B be decreased about 0.66 times so that the quantity of light emitted by the blue LED 31B may be decreased about 0.66 times. Thus, in the case of white display, when it is assumed that color filters have small passing loss, brightness may be doubled as compared with the previous display example having the blue filter 17B (for example, refer to FIG. 13).

In the display example of FIG. 25, in the case of red display, since red light is transmitted by not only the magenta transmittable region 19Mg but also the full-color transmittable region 18, passing area of light in red display is doubled as compared with the previous case. Similarly, in the case of green display, since green light is transmitted by not only the cyan transmittable region 19Cy but also the full-color transmittable region 18, passing area of light in green display is doubled as compared with the previous case. In this way, brightness in each of red and green display may be approximately doubled as compared with the previous display example as shown in FIG. 13 for example. Furthermore, in the case of blue display, since light passes through all the color transmittable regions, passing area of light is tripled as compared with the previous case. Therefore, brightness in blue display may be approximately tripled as compared with the previous display example as shown in FIG. 13 for example. It is preferable that, for example, the amount of current through the blue LED 31B be decreased about 0.66 times so that the quantity of light emitted by the blue LED 31B may be decreased about 0.66 times in order to balance colors between respective color display. Thus, brightness in blue display is also approximately doubled, so that brightness in respective color display may be adjusted to be approximately doubled. [Second display example according to fourth embodiment (complementary color display)]

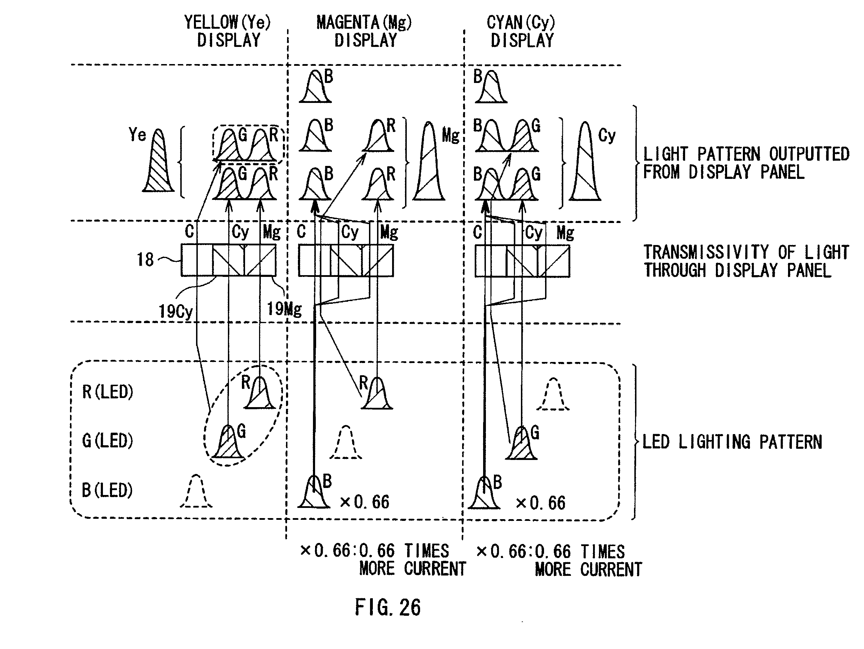

FIG. 26 schematically shows operation in the case that white display and complementary color display (yellow display, magenta display, and cyan display) are performed by the color display unit shown in FIG. 22. When white display is performed, operation is the same as in the display example of FIG. 25. In a display example of FIG. 26, when yellow display is performed, the red LED 31R and the green LED 31G are lit among the three kinds of LEDs. In addition, all the transmittable regions (the full-color transmittable region 18, the cyan transmittable region 19Cy, and the magenta transmittable region 19Mg) of the display panel 10D are controlled into light transmitting mode. The red LED 31R and the blue LED 31B of the three kinds of LEDs are lit, and all the transmittable regions of the display panel 10D are controlled into light transmitting mode, thereby to achieve magenta display. The green LED 31G and the blue LED 31B of the three kinds of LEDs are lit, and all the transmittable regions of the display panel 10D are controlled into light transmitting mode, thereby to achieve cyan display.

In a display example of FIG. 26, since the transparent filter 17C is used in place of the blue filter 17B, transmission amount of each of red and green light may be doubled as compared with the display example of FIG. 14 for example. For example, in the case of yellow display, red light is transmitted by not only the magenta transmittable region 19Mg but also the full-color transmittable region 18. In addition, green light is transmitted by not only the cyan transmittable region 19Cy but also the full-color transmittable region 18. Thus, passing area of light in yellow display is doubled as compared with the previous case. In the case of magenta display, while red light is doubled in light passing area as compared with the previous case, blue light is tripled in light passing area as compared with the previous case because it passes through all the color transmittable regions. Similarly, in the case of cyan display, while green light is doubled in light passing area as compared with the previous case, blue light is tripled in light passing area as compared with the previous case because it passes through all the color transmittable regions. Therefore, even in each of magenta and cyan display, it is preferable that the amount of current through the blue LED 31B be decreased about 0.66 times so that the quantity of light emitted by the blue LED 31B may be decreased about 0.66 times in order to balance colors between respective color display as in the case of white display. Thus, brightness may be doubled in each color display as compared with the previous display example as shown in FIG. 14 for example.

### Modification of Fourth Embodiment

FIG. 22 shows the configuration where cyan and magenta, two kinds of color transmittable regions (the cyan transmittable region 19Cy and the magenta transmittable region 19Mg) are provided as the partially transmittable region 19A, and the portion corresponding to the previous blue transmittable region is made transparent to be the full-color transmittable region 18. However, a yellow filter may be used as a complementary-color color filter used for the partially transmittable region 19A. That is, the partially transmittable region 19A may be configured as a combination of cyan and yellow regions, or a combination of magenta and yellow regions. While such combinations are omitted to be shown, a color filter is partially made transparent in any combination, therefore use efficiency of light may be increased as compared with the previous type using all the RGB color filters. Moreover, the quantity of light emitted by each color LED is appropriately adjusted in any combination, thereby color balance or color temperature may be appropriately controlled.

### [Other embodiments]

The invention is not limited to the above embodiments, and various modifications or alterations of the invention may be carried out.

For example, while the transparent filter 17C is physically provided in the full-color transmittable region 18 in the embodiments, the transparent filter 17C may be omitted from components. In a word, the full-color transmittable region 18 may be structured to transmit any color light from the backlight 30 or 130. In addition, an area ratio between the full-color transmittable region 18 and the partially transmittable region 19 is not limited to the area ratio in each of the embodiments. For example, while an example is shown in the second embodiment, where area of the yellow transmittable region 19Y is twice the area of the full-color transmittable region 18, such an area ratio may be smaller or larger than two. In this case, the backlight 30 is appropriately adjusted in quantity of light emitted by each color LED, so that color balance may be adjusted.

The present application contains subject matter related to that disclosed in Japanese Priority Patent Application JP 2009-014629 filed in the Japan Patent Office on January 26, 2009, the entire content of which is hereby incorporated by reference.

It should be understood by those skilled in the art that various modifications, combinations, sub-combinations and alterations may occur depending on design requirements and other factors insofar as they are within the scope of the appended claims or the equivalent thereof.

## Claims

1. A color display unit, comprising:
a light source section having plural kinds of LEDs, each of the LEDs being independently controlled to emit light, and each kind of LEDs emitting light of a color different from another; and
a display section controlling transmissivity of light from the light source section in synchronization with light-emission control by the light source section, thereby to achieve desired color display,
wherein the display section has a full-color transmittable region and a partially transmittable region, the full-color transmittable region allowing all color components of the light from the light source section to be transmitted, while the partially transmittable region inhibiting passage of one or more in the color components of the light from the light source section, and
the display section controls the transmissivity of the light from the light source section independently for each of the full-color transmittable region and the partially transmittable region.

2. The color display unit according to claim 1, wherein
the plural kinds of LEDs are three kinds of LEDs which are blue LEDs, magenta LEDs and cyan LEDs, each LED being independently controlled to emit light of respective colors,
the cyan LED includes a blue light emitter and a green phosphor, the green phosphor being excited by blue light from the blue light emitter to emit green light,
the magenta LED includes a blue light emitter and a red phosphor, the red phosphor being excited by blue light from the blue light emitter to emit red light, and
the partially transmittable region in the display section inhibits passage of the blue light, or both of the blue light and other color light.

3. The color display unit according to claim 2, wherein
the partially transmittable region includes a red transmittable region and a green transmittable region, the red transmittable region allowing only red light in the color components of the light from the light source section to be transmitted, while the green transmittable region allowing only green light in the color components of the light from the light source section to be transmitted, and
the display section controls the transmissivity of the light independently for each of the full-color transmittable region, the red transmittable region and the green transmittable region.

4. The color display unit according to claim 3, wherein
the magenta LEDs and the cyan LEDs of the three kinds of LEDs are lit, and the full-color transmittable region, the red transmittable region and the green transmittable region in the display section are controlled into light transmitting mode, thereby to achieve white display,
only the magenta LEDs of the three kinds of LEDs are lit, and only the red transmittable region is controlled into light transmitting mode, thereby to achieve red display,
only the cyan LEDs of the three kinds of LEDs are lit, and only the green transmittable region is controlled into light transmitting mode, thereby to achieve green display,
only the blue LEDs of the three kinds of LEDs are lit, and only the full-color transmittable region is controlled into light transmitting mode, thereby to achieve blue display.

5. The color display unit according to claim 3, wherein
the magenta LEDs and the cyan LEDs are lit, and the full-color transmittable region, the red transmittable region and the green transmittable region in the display section are controlled into light transmitting mode, thereby to achieve white display,
the magenta LEDs and the cyan LEDs of the three kinds of LEDs are lit, and the red transmittable region and the green transmittable region are controlled into light transmitting mode, thereby to achieve yellow display,
the blue LEDs and the magenta LEDs of the three kinds of LEDs are lit, and the full-color transmittable region and the red transmittable region are controlled into light transmitting mode, thereby to achieve magenta display, and
the blue LEDs and the cyan LEDs of the three kinds of LEDs are lit, and the full-color transmittable region and the green transmittable region are controlled into light transmitting mode, thereby to achieve cyan display.

6. The color display unit according to claim 2, wherein
the partially transmittable region includes a yellow transmittable region which inhibits passage of the blue light and allows both of red light and green light to be transmitted, in the color components of the light from the light source section, and
the display section controls the transmissivity of the light independently for each of the full-color transmittable region and the yellow transmittable region.

7. The color display unit according to claim 6, wherein
all of the three kinds of LEDs are lit, and the full-color transmittable region and the yellow transmittable region in the display section are controlled into light transmitting mode, thereby to achieve white display,
only the magenta LEDs of the three kinds of LEDs are lit, and only the yellow transmittable region is controlled into light transmitting mode, thereby to achieve red display,
only the cyan LEDs of the three kinds of LEDs are lit, and only the yellow transmittable region is controlled into light transmitting mode, thereby to achieve green display,
only the blue LEDs of the three kinds of LEDs are lit, and only the full-color transmittable region is controlled into light transmitting mode, thereby to achieve blue display.

8. The color display unit according to claim 6, wherein
all of the three kinds of LEDs are lit, and the full-color transmittable region and the yellow transmittable region in the display section are controlled into light transmitting mode, thereby to achieve white display,
the magenta LEDs and the cyan LEDs of the three kinds of LEDs are lit, and only the yellow transmittable region is controlled into light transmitting mode, thereby to achieve yellow display,
the blue LEDs and the magenta LEDs of the three kinds of LEDs are lit, and the full-color transmittable region and the yellow transmittable region are controlled into light transmitting mode, thereby to achieve magenta display, and
the blue LEDs and the cyan LEDs of the three kinds of LEDs are lit, and the full-color transmittable region and the yellow transmittable region are controlled into light transmitting mode, thereby to achieve cyan display.

9. The color display unit according to any one of claims 6 to 8, wherein area of the yellow transmittable region is twice as large as area of the full-color transmittable region.

10. The color display unit according to claim 1, wherein
the plural kinds of LEDs are three kinds of LEDs which are blue LEDs, red LEDs and green LEDs, each LED being independently controlled to emit light of respective colors,
the partially transmittable region includes any two of a blue transmittable region allowing only blue light to be transmitted, a red transmittable region allowing only red light to be transmitted, and a green transmittable region allowing only green light to be transmitted, and
the display section controls the transmissivity of the light independently for each of the full-color transmittable region and the two kinds of color transmittable region.

11. The color display unit according to claim 1, wherein
the plural kinds of LEDs are three kinds of LEDs which are blue LEDs, red LEDs and green LEDs, each LED being independently controlled to emit light of respective colors,
the partially transmittable region includes any two of a magenta transmittable region allowing red light and blue light to be transmitted, a cyan transmittable region allowing green light and blue light to be transmitted, and a yellow transmittable region allowing red light and green light to be transmitted, and
the display section controls the transmissivity of the light independently for each of the full-color transmittable region and the two kinds of color transmittable region.
